# EUROPEAN PATENT APPLICATION

(11) **EP 4 723 050 A1**
(43) Date of publication of application: **08.04.2026**
(21) Application number: 24845756.6
(22) Date of filing: 24.05.2024
(51) Int. Cl.: G06T 19/20, G06T 19/00, G06V 20/20, G06V 30/10, G06T 13/40, G06F 3/04815, G06T 7/11

(54) **METHOD AND DEVICE FOR GENERATING AND ARRANGING VIRTUAL OBJECT CORRESPONDING TO REAL OBJECT**

(30) Priority: 24.07.2023 KR 20230096359; 26.09.2023 KR 20230129601
(71) Applicant: Samsung Electronics Co., Ltd., Suwon-si, Gyeonggi-do 16677 (KR)
(72) Inventor: PARK, Miji, Suwon-si Gyeonggi-do 16677 (KR); KIM, Sangheon, Suwon-si Gyeonggi-do 16677 (KR); KIM, Youngjung, Suwon-si Gyeonggi-do 16677 (KR); PARK, Hungi, Suwon-si Gyeonggi-do 16677 (KR); AN, Jinwan, Suwon-si Gyeonggi-do 16677 (KR); LEE, Sangyong, Suwon-si Gyeonggi-do 16677 (KR); LEE, Jiwoo, Suwon-si Gyeonggi-do 16677 (KR)
(74) Representative: Gulde & Partner
(86) International application number: PCT/KR2024/007057
(87) International publication number: WO 2025/023452

(57) **Abstract**

An electronic device according to an embodiment may: acquire a real space image by using a camera; identify external objects from the obtained real space image; determine an object of interest among the identified external objects on the basis of a configuration for a virtual space; and arrange, in the virtual space, a virtual object corresponding to the determined object of interest.

## Description

### BACKGROUND

### 1. Field

Certain example embodiments relate to a technology for a method and/or system for generating and arranging a virtual object corresponding to a real object.

### 2. Description of Related Art

Recently, virtual reality (VR), augmented reality (AR), and mixed reality (MR) technologies utilizing computer graphics technology have been developed. At this time, VR technology refers to a technology that uses a computer to build a virtual space that does not exist in the real world and then makes a user feel the virtual space like reality, and AR or MR technology refers to a technology that adds computer-generated information to the real world, that is, a technology that combines the real world and a virtual world to allow real-time interaction with a user.

Among these technologies, AR and MR technologies are utilized in conjunction with technologies in various fields (e.g., a broadcast technology, medical technology, game technology, etc.). Representative examples of integrating the augmented-reality technology and using the augmented-reality technology in the broadcast technology field are a smoothly changing weather map in front of a weather caster who delivers a weather forecast on television (TV) or an advertisement image, which does not exist in a stadium, inserted into a screen in a sports broadcast and broadcasted as if the advertisement image is real.

A representative service for providing a user with AR or MR is the "metaverse". The metaverse is a compound word of "meta" meaning virtual or abstract and "universe" meaning a world, which refers to three-dimensional virtual reality. The metaverse is a more advanced concept than a typical virtual reality environment and provides an augmented-reality environment which absorbs virtual reality, such as a web and the Internet, in the real world.

### SUMMARY

According to certain example embodiments, an electronic device may include a camera configured to capture a real space, communication circuitry, memory configured to store computer-executable instructions, and at least one processor configured to execute the instructions by accessing the memory. The processor(s) and/or instructions may be configured to, when the instructions are executed, cause the processor(s) to obtain a real space image using the camera, identify an external object from the obtained real space image, determine an object of interest among the identified external object based on a configuration for a virtual space, and arrange a virtual object corresponding to the determined object of interest in the virtual space.

According to certain example embodiments, a method performed by an electronic device may include obtaining a real space image using the camera, and identifying an external object from the obtained real space image, determining an object of interest among the identified external object based on configuration for a virtual space, and arranging a virtual object corresponding to the determined object of interest in the virtual space.

### BRIEF DESCRIPTION OF THE DRAWINGS

FIG. 1 is a block diagram illustrating an exemplary configuration of an electronic device according to an example embodiment;
FIG. 2 illustrates an optical see-through (OST) device according to various example embodiments;
FIG. 3 illustrates an example of an optical system of an eye-tracking (ET) camera, a transparent member, and a display according to various example embodiments;
FIGS. 4A and 4B are diagrams illustrating examples of a front view and a rear view of an electronic device according to various example embodiments;
FIG. 5 is a diagram illustrating an example of construction of a virtual space and input from and output to a user in a virtual space according to various example embodiment;
FIG. 6 is a flowchart schematically illustrating a process of arranging a virtual object corresponding to a real object in a virtual space according to various example embodiments;
FIG. 7 is a diagram illustrating a process of identifying external objects from a real space image according to various example embodiments;
FIG. 8 is a diagram illustrating a process of determining an object of interest among identified external objects according to various example embodiments;
FIG. 9 is a diagram illustrating a process of generating a virtual object corresponding to an object of interest and arranging the virtual object in a virtual space according to various example embodiments;
FIG. 10 is a diagram illustrating a process of determining an object of interest based on a living room mode of an electronic device and arranging the determined object of interest in a virtual space according to various example embodiments;
FIG. 11 is a diagram illustrating a process of updating a shape and position of a virtual object arranged in a virtual space over time according to various example embodiments;
FIG. 12 is a diagram illustrating a process of determining whether to arrange a virtual object corresponding to a pet in a virtual space according to various example embodiments; and
FIGS. 13A to 13D are diagrams illustrating a process in which an electronic device changes a display method of a screen according to a reality level according to various example embodiments.

### DETAILED DESCRIPTION

Hereinafter, certain example embodiments will be described in detail with reference to the accompanying drawings. When describing the embodiments with reference to the accompanying drawings, like reference numerals refer to like elements and a repeated description related thereto will be omitted.

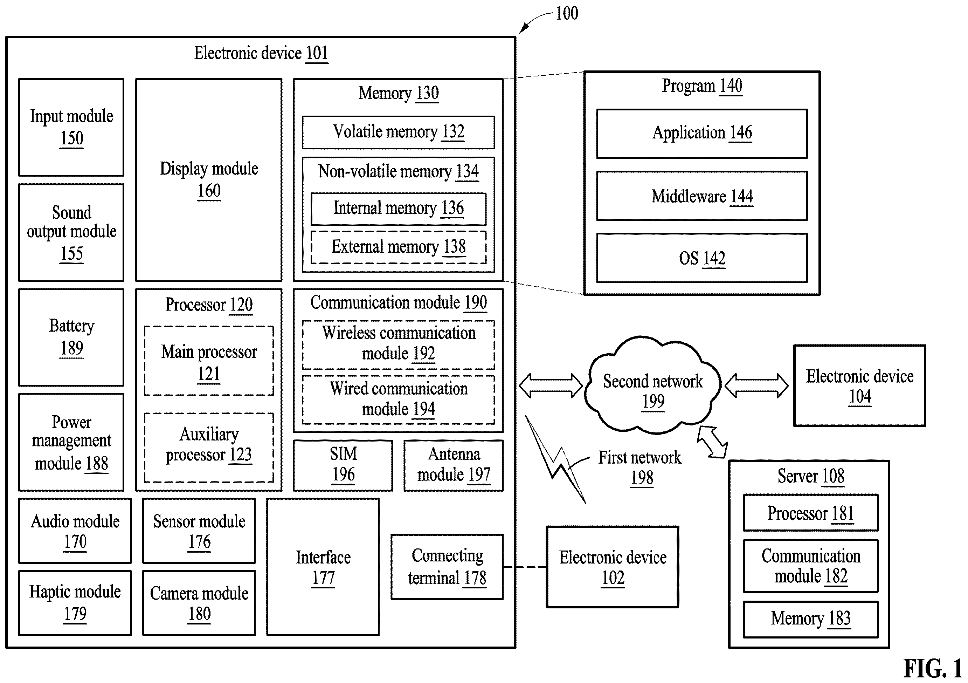

FIG. 1 is a block diagram illustrating an exemplary configuration of an electronic device according to an embodiment.

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected, directly or indirectly, to the processor 120, and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for processing of an artificial intelligence (AI) model. The AI model may be generated by machine learning. Such learning may be performed by, for example, the electronic device 101 in which artificial intelligence is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to an embodiment, the receiver may be implemented separately from the speaker or as a part of the speaker.

The display module 160 (e.g., a display) may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to detect a touch, or a pressure sensor adapted to measure the intensity of force incurred by the touch.

The audio module 170 may convert a sound into an electric signal or vice versa. According to an embodiment, the audio module 170 may obtain the sound via the input module 150, or output the sound via the sound output module 155 or an external electronic device (e.g., the electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected, directly or indirectly, to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, image signal processors, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190, comprising communication circuitry, may include one or more CPs that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN))). These various types of communication modules may be implemented as a single component (e.g., a single chip), or may be implemented as multi components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192, comprising communication circuitry, may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to embodiments, the antenna module 197 may form a mmWave antenna module. According to an example embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199.

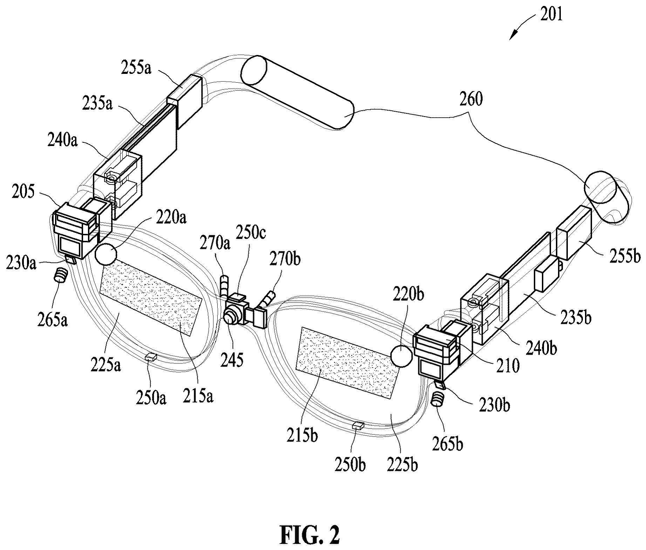

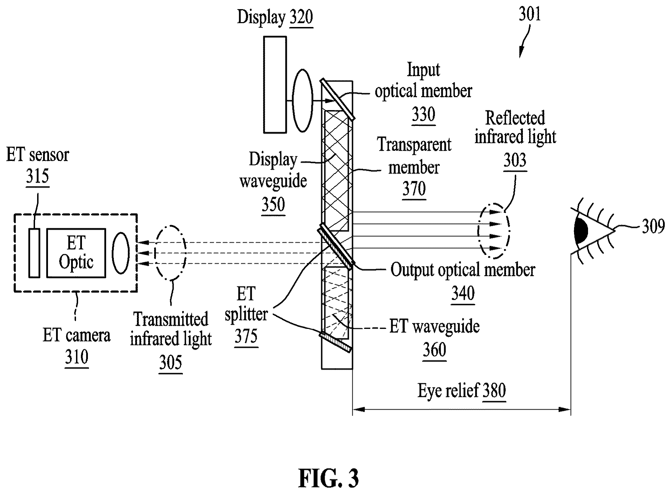

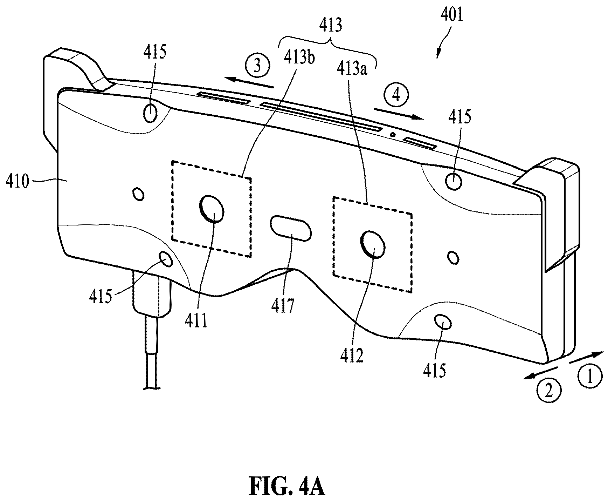

Each of the external electronic devices 102 and 104, and the server 108 may be a device of the same type as or a different type from the electronic device 101. According to an embodiment, all or some of operations to be executed by the electronic device 101 may be executed at one or more external electronic devices (e.g., the external electronic devices 102 and 104, and the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. In the disclosure, an example in which the electronic device 101 is an augmented reality (AR) device (e.g., an electronic device 201 of FIG. 2, an electronic device 301 of FIG. 3, or an electronic device 401 of FIGs. 4A-4B), and the server 108 among the external electronic devices 102 and 104, and the server 108 transmits, to the electronic device 101, a result of executing a virtual space and an additional function or service associated with the virtual space will be mainly described.

The server 108 may include a processor 181, a communication module 182 comprising communication circuitry, and a memory 183. The processor 181, the communication module 182, and the memory 183 may be similarly configured to the processor 120, the communication module 190, and the memory 130 of the electronic device 101. For example, the processor 181 may provide a virtual space and an interaction between users in the virtual space by executing instructions stored in the memory 183. The processor 181 may generate at least one of visual information, auditory information, or tactile information of the virtual space and objects in the virtual space. For example, as the visual information, the processor 181 may generate rendered data (e.g., visual rendered data) obtained by rendering an appearance (e.g., a shape, size, color, or texture) of the virtual space and an appearance (e.g., a shape, size, color, or texture) of an object positioned in the virtual space. In addition, the processor 181 may generate rendered data obtained by rendering a change (e.g., an appearance change of an object, sound generation, or tactile sensation generation) based on at least one of interactions between objects (e.g., a physical object, a virtual object, or an avatar object) in the virtual space or a user input for an object (e.g., a physical object, a virtual object, or an avatar object). The communication module 182 may establish communication with a first electronic device (e.g., the electronic device 101) of a user and a second electronic device (e.g., the electronic device 102) of another user. The communication module 182 may transmit at least one of the visual information, the auditory information, or the tactile information described above to the first electronic device and the second electronic device. For example, the communication module 182 may transmit the rendering data.

For example, the server 108 may render content data executed in an application and transmit the rendered content data to the electronic device 101, and the electronic device 101 receiving the data may output the content data to the display module 160. If the electronic device 101 detects a motion of a user through an inertial measurement unit (IMU) sensor or the like, the processor 120 of the electronic device 101 may correct rendered data received from the external electronic device 102 based on information of the motion, and output the data to the display module 160. Alternatively, the processor may transmit the information of the motion to the server 108 to request rendering such that screen data is updated accordingly. However, embodiments are limited thereto, and the rendering may be performed by various types of external electronic devices (e.g., 102 and 104) such as a smartphone or a case device for storing and charging the electronic device 101. The rendering data corresponding to the virtual space generated by the external electronic devices 102 and 104 may be provided to the electronic device 101. In another example, the electronic device 101 may receive virtual spatial information (e.g., vertex coordinates, texture, and color defining a virtual space) and object information (e.g., vertex coordinates, texture, and color defining an appearance of an object) from the server 108 and perform rendering by itself based on the received data.

Each "processor" herein includes processing circuitry, and/or may include multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

FIG. 2 illustrates an optical see-through (OST) device according to various embodiments.

An electronic device 201 may include at least one of a display (e.g., the display module 160 of FIG. 1), a vision sensor, light sources 230a and 230b, an optical element, or a substrate. The electronic device 201 including a transparent display and providing an image through the transparent display may be referred to as an OST device.

For example, the display may include a liquid crystal display (LCD), a digital mirror device (DMD), a liquid crystal on silicon (LCoS), an organic light-emitting diode (OLED), or a micro light-emitting diode (micro-LED).

In an embodiment, when the display is one of an LCD, a DMD, or an LCoS, the electronic device 201 may include the light sources 230a and 230b configured to emit light to a screen output area (e.g., screen display portions 215a and 215b) of the display. In another embodiment, when the display is capable of generating light by itself, for example, when the display is either the OLED or the micro-LED, the electronic device 201 may provide a virtual image with a relatively high quality to a user even though the separate light sources 230a and 230b are not included. For example, when the display is implemented as an OLED or a micro-LED, the light sources 230a and 230b may be unnecessary, which may lead to lightening of the electronic device 201.

Referring to FIG. 2, the electronic device 201 may include the display, a first transparent member 225a, and/or a second transparent member 225b, and the user may use the electronic device 201 while wearing the electronic device 201 on a face of the user. The first transparent member 225a and/or the second transparent member 225b may be formed of a glass plate, a plastic plate, or a polymer, and may be transparently or translucently formed. According to an embodiment, the first transparent member 225a may be disposed to face the right eye of the user, and the second transparent member 225b may be disposed to face the left eye of the user. The display may include a first display 205 configured to output a first image (e.g., a right image) corresponding to the first transparent member 225a, and a second display 210 configured to output a second image (e.g., a left image) corresponding to the second transparent member 225b. According to an embodiment, when each display is transparent, the displays and the transparent members may be disposed to face the eyes of the user to configure the screen display portions 215a and 215b.

In an embodiment, a light path of light emitted from the displays 205 and 210 may be guided by a waveguide through the input optical members 220a and 220b. Light moving into the waveguide may be guided toward eyes of a user through an output optical member (e.g., an output optical member 340 of FIG. 3). The screen display portions 215a and 215b may be determined based on light emitted toward the eyes of the user.

For example, the light emitted from the displays 205 and 210 may be reflected from a grating region of the waveguide formed in the input optical members 220a and 220b and the screen display portions 215a and 215b, and may be transmitted to the eyes of the user.

The optical element may include at least one of a lens or an optical waveguide.

The lens may adjust a focus such that a screen output to the display may be visible to the eyes of the user. The lens may include, for example, at least one of a Fresnel lens, a pancake lens, or a multichannel lens.

The optical waveguide may transmit image rays generated by the display to the user's eyes. For example, the image rays may represent rays of light emitted by the light sources 230a and 230b, that have passed through the screen output area of the display. The optical waveguide may be formed of glass, plastic, or a polymer. The optical waveguide may have a nanopattern formed on one inside surface or one outside surface, for example, a grating structure of a polygonal or curved shape. An exemplary structure of the optical waveguide will be described below with reference to FIG. 3.

The vision sensor may include at least one of a camera sensor or a depth sensor.

First cameras 265a and 265b are cameras for recognition and may be cameras used for 3DoF and 6DoF head tracking, hand detection, hand tracking, and spatial recognition. The first cameras 265a and 265b may mainly include a global shutter (GS) camera. Since a stereo camera is required for head tracking and spatial recognition, the first cameras 265a and 265b may include two or more GS cameras. A GS camera may have a more excellent performance compared to a rolling shutter (RS) camera, in terms of detecting and tracking a fine movement, such as a quick movement of a hand or a finger. For example, the GS camera may have a low image blur. The first cameras 265a and 265b may capture image data used for spatial recognition for 6DoF and a simultaneous localization and mapping (SLAM) function through depth imaging. In addition, a user gesture recognition function may be performed based on image data captured by the first camera 265a and 265b.

Second cameras 270a and 270b, which are eye tracking (ET) cameras, may be used to capture image data for detecting and tracking the pupils of the user. The second cameras 270a and 270b will be described below with reference to FIG. 3.

A third camera 245 may be a camera for image capturing. The third camera 245 may include a high-resolution (HR) camera to capture an HR image or a photo video (PV) image. The third camera 245 may include a color camera having functions for obtaining a high-quality image, such as, an automatic focus (AF) function and an optical image stabilizer (OIS). The third camera 245 may be a GS camera or an RS camera.

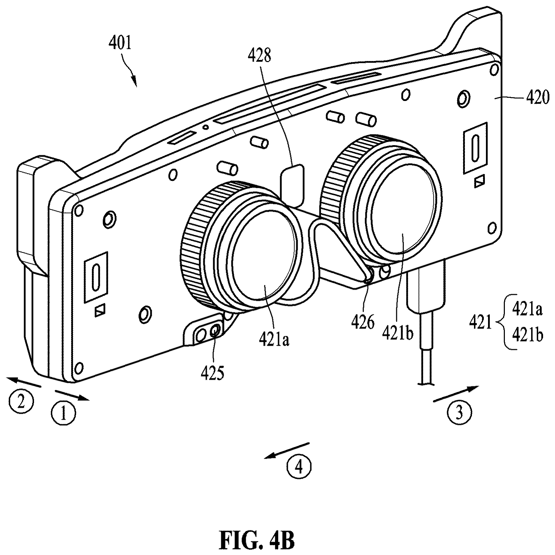

A fourth camera (e.g., face recognition cameras 425 and 426 of FIG. 4 below) is a face recognition camera, and a face tracking (FT) camera may be used to detect and track facial expressions of the user.

A depth sensor (not shown) may be a sensor configured to sense information for determining a distance to an object such as time of flight (TOF). The TOF is a technology for measuring a distance to an object using a signal (e.g., a near infrared ray, ultrasound, laser, etc.). A TOF-based depth sensor may transmit a signal from a transmitter and measure the signal by a receiver, thereby measuring a TOF of the signal.

The light sources 230a and 230b (e.g., illumination modules) may include an element (e.g., an LED) configured to emit light of various wavelengths. The illumination module may be attached to various positions depending on the purpose of use. In an example of use, a first illumination module (e.g., an LED element), attached around a frame of an AR glasses device, may emit light for assisting gaze detection when tracking a movement of the eyes with an ET camera. The first illumination module may include, for example, an IR LED of an infrared wavelength. In another example of use, a second illumination module (e.g., an LED element) may be attached around hinges 240a and 240b connecting a frame and a temple or attached in proximity to a camera mounted around a bridge connecting the frame. The second illumination module may emit light for supplementing ambient brightness when the camera captures an image. When it is not easy to detect a subject in a dark environment, the second illumination module may emit light.

Substrates 235a and 235b (e.g., printed-circuit boards (PCBs)) may support the components described above.

The PCB may be disposed on temples of the glasses. A flexible PCB (FPCB) may transmit an electrical signal to each module (e.g., a camera, a display, an audio module, and a sensor module) and another PCB. According to an embodiment, at least one PCB may include a first substrate, a second substrate, and an interposer disposed between the first substrate and the second substrate. In another example, the PCB may be disposed at a center of a set. An electrical signal may be transmitted to each module and the other PCB through the FPCB.

The other components may include, for example, at least one of a plurality of microphones (e.g., a first microphone 250a, a second microphone 250b, and a third microphone 250c), a plurality of speakers (e.g., a first speaker 255a and a second speaker 255b), a battery 260, an antenna, or a sensor (e.g., an acceleration sensor, a gyro sensor, a touch sensor, etc.).

FIG. 3 illustrates an example of an optical system of an ET camera, a transparent member, and a display according to various embodiments.

FIG. 3 is a diagram illustrating an operation of an ET camera included in an electronic device according to an embodiment. FIG. 3 illustrates a process in which an ET camera 310 (e.g., the second cameras 270a and 270b of FIG. 2) of an electronic device 301 according to an embodiment tracks an eye 309 of a user, e.g., a gaze of the user, using light (e.g., infrared light) output from a display 320 (e.g., the first display 205 and the second display 210 of FIG. 2).

A second camera (e.g., the second cameras 270a and 270b of FIG. 2) may be the ET camera 310 that collects information for positioning a center of a virtual image projected onto the electronic device 301 according to a direction at which pupils of a wearer of the electronic device 301 gaze. The second camera may also include a GS camera to detect the pupils and track a rapid movement of the pupils. The ET cameras may be installed for a right eye and a left eye, and the ET cameras having the same camera performance and specifications may be used. The ET camera 310 may include an ET sensor 315. The ET sensor 315 may be included inside the ET camera 310. The infrared light output from the display 320 may be transmitted as a reflected infrared light 303 to the eye 309 of the user by a half mirror. The ET sensor 315 may detect a transmitted infrared light 305 that is generated when the reflected infrared light 303 is reflected from the eye 309 of the user. The ET camera 310 may track the eye 309 of the user, that is, the gaze of the user, based on a result of the detection by the ET sensor 315.

The display 320 may include a plurality of visible light pixels and a plurality of infrared pixels. The visible light pixels may include red (R), green (G), and blue (B) pixels. The visible light pixels may output visible light corresponding to a virtual object image. The infrared pixels may output infrared light. The display 320 may include, for example, micro LEDs, or OLEDs.

A display waveguide 350 and an ET waveguide 360 may be included in a transparent member 370 (e.g., the first transparent member 225a and the second transparent member 225b of FIG. 2). The transparent member 370 may be formed as, for example, a glass plate, a plastic plate, or a polymer, and may be transparently or translucently formed. The transparent member 370 may be disposed to face an eye of a user. In this case, a distance between the transparent member 370 and the eye 309 of the user may be referred to as an "eye relief" 380.

The transparent member 370 may include the waveguide 350 and the ET waveguide 360. The transparent member 370 may include an input optical member 330 and an output optical member 340. In addition, the transparent member 370 may include an ET splitter 375 that splits the input light into several waveguides.

According to an embodiment, light incident to one end of the display waveguide 350 may be propagated inside the display waveguide 350 by a nanopattern and may be provided to a user. In addition, the display waveguide 350 formed of a free-form prism may provide incident light as an image ray to the user through a reflection mirror. The display waveguide 350 may include at least one of a diffractive element (e.g., a diffractive optical element (DOE) or a holographic optical element (HOE)) or a reflective element (e.g., a reflection mirror). The display waveguide 350 may guide a display light (e.g., the image ray) emitted from the light source to the eyes of the user, using at least one of the diffractive element or the reflective element included in the display waveguide 350. For reference, although FIG. 3 illustrates that the output optical member 340 is separate from the ET waveguide 360, the output optical member 340 may be included in the ET waveguide 360.

According to an embodiment, the diffractive element may include the input optical member 330 and the output optical member 340. For example, the input optical member 330 may refer, for example, to an "input grating region". The output optical member 340 may refer, for example, to an "output grating region". The input grating region may serve as an input end that diffracts (or reflects) light, that is output from a light source (e.g., a micro-LED), to transmit the light to a transparent member (e.g., the first transparent member and the second transparent member) of a screen display portion. The output grating region may serve as an exit that diffracts (or reflects), to the eyes of the user, the light transmitted to the transparent member (e.g., the first transparent member and the second transparent member) of a waveguide.

According to an embodiment, the reflective element may include a total reflection optical element or a total reflection waveguide for total internal reflection (TIR). For example, TIR, which is one scheme for inducing light, may form an angle of incidence such that light (e.g., a virtual image) entering through the input grating region is completely reflected from one surface (e.g., a specific surface) of the waveguide, to completely transmit the light to the output grating region.

In an embodiment, a light path of the light emitted from the display 320 may be guided by the waveguide through the input optical member 330. The light moving the inside of the waveguide may be guided toward the eyes of the user through the output optical member 340. The screen display portion may be determined based on the light emitted toward the eyes of the user.

FIGS. 4A and 4B are diagrams illustrating examples of a front view and a rear view of an electronic device according to various embodiments. FIG. 4A shows an outward form of an electronic device 401 viewed in a first direction (①), and FIG. 4B shows an outward form of the electronic device 401 viewed in a second direction (②). When a user wears the electronic device 401, an outward form viewed by the eyes of the user may be the one shown in FIG. 4B.

Referring to FIG. 4A, according to various embodiments, the electronic device 401 (e.g., the electronic device 101 of FIG. 1, the electronic device 201 of FIG. 2, or the electronic device 301 of FIG. 3) may provide a service providing an extended reality (XR) experience to the user. For example, XR or XR service may be defined as a service that collectively refers to virtual reality (VR), AR, and/or mixed reality (MR).

According to an embodiment, the electronic device 401 may refer to a head-mounted device or head-mounted display (HMD) worn on a head of the user but may be provided in the form of at least one of glasses, goggles, a helmet, or a hat. The electronic device 401 may include some types such as an OST type configured such that, when being worn, external light reaches the eyes of the user through glasses or a video see-through (VST) type configured such that, when being worn, light emitted from a display reaches the eyes of the user but external light is blocked not to reach the eyes of the user.

According to an embodiment, the electronic device 401 may be worn on the head of the user and provide images related to an XR service to the user. For example, the electronic device 401 may provide XR content (hereinafter, also referred to as an XR content image) output such that at least one virtual object is visible overlapping in a display region or a region determined as a field of view (FoV) of the user. According to an embodiment, the XR content may refer to an image related to a real space obtained through a camera (e.g., an image capturing camera) or an image or video in which at least one virtual object is added to a virtual space. According to an embodiment, the electronic device 401 may provide XR content based on a function being performed by the electronic device 401 and/or a function being performed by at least one or more external electronic devices of external electronic devices (e.g., the electronic devices 102 and 104 of FIG. 1 and the server 108 of FIG. 1).

According to an embodiment, the electronic device 401 may be at least partially controlled by an external electronic device (e.g., the electronic device 102 or 104 of FIG. 1), or may perform at least one function under the control of the external electronic device or perform at least one function independently.

Referring to FIG. 4A, a vision sensor may be disposed on a first surface of a housing of a main body 410 of the electronic device 401. The vision sensor may include cameras (e.g., second function cameras 411 and 412, and first function cameras 415) and/or a depth sensor 417 for obtaining information related to a surrounding environment of the electronic device 401.

In an embodiment, the second function cameras 411 and 412 may obtain images related to the surrounding environment of the electronic device 401. With a wearable electronic device worn by the user, the first function cameras 415 may obtain images. The first function cameras 415 may be used for hand detection and tracking, and recognition of gestures (e.g., hand gestures) of the user. The first function cameras 415 may be used for 3DoF and 6DoF head tracking, position (space, environment) recognition, and/or movement recognition. In an embodiment, the second function cameras 411 and 412 may also be used for hand detection and tracking, and the recognition of user gestures.

In an embodiment, the depth sensor 417 may be configured to transmit a signal and receive a signal reflected from an object, and may be used to determine a distance to the object based on a TOF. Alternatively of or additionally, the cameras 411, 412, and 415 may determine the distance to the object in place of the depth sensor 417.

Referring to FIG. 4B, face recognition cameras 425 and 426 and/or a display 421 (and/or a lens) may be disposed on a second surface 420 of the housing of the main body 410.

In an embodiment, the face recognition cameras 425 and 426 adjacent to a display may be used to recognize a face of the user or may recognize and/or track both eyes of the user.

In an embodiment, the display 421 (and/or a lens) may be disposed on the second surface 420 of the electronic device 401. In an embodiment, the electronic device 401 may not include some of the plurality of cameras 415. Although not shown in FIGS. 4A and 4B, the electronic device 401 may further include at least one of the components shown in FIG. 2.

According to an embodiment, the electronic device 401 may include the main body 410 on which at least some of the components of FIG. 1 are mounted, the display 421 (e.g., the display module 160 of FIG. 1) disposed in the first direction ① of the main body 410, the first function camera 415 (e.g., a recognition camera) disposed in the second direction ② of the main body 410, the second function cameras 411 and 412 (e.g., image capturing cameras) disposed in the second direction ②, a third function camera 428 (e.g., an ET camera) disposed in the first direction ①, fourth function cameras 425 and 426 (e.g., face recognition cameras) disposed in the first direction ①, the depth sensor 417 disposed in the second direction ②, and a touch sensor 413 disposed in the second direction ②. Although not shown in the drawings, the main body 410 may include a memory (e.g., the memory 130 of FIG. 1) and a processor (e.g., the processor 120 of FIG. 1) therein, and may further include other components shown in FIG. 1.

According to an embodiment, the display 421 may include an LCD, a DMD, a LCoS device, an OLED, or a micro-LED.

In an embodiment, when the display 421 is one of an LCD, a DMD, or an LCoS device, the electronic device 401 may include a light source that emits light to a screen output area of the display 421. In another embodiment, when the display 421 is capable of generating light by itself, for example, when the electronic device 401 is formed of one of an OLED or a micro-LED, the electronic device 401 may provide an XR content image with a relatively high quality to the user, even though a separate light source is not included. In an embodiment, when the display 421 is implemented as an OLED or a micro-LED, a light source may be unnecessary, which may lead to lightening of the electronic device 401.

According to an embodiment, the display 421 may include a first transparent member 421a and/or a second transparent member 421b. The user may use the electronic device 401 with it worn on the face. The first transparent member 421a and/or the second transparent member 421b may be formed of a glass plate, a plastic plate, or a polymer, and may be transparently or translucently formed. According to an embodiment, the first transparent member 421a may be disposed to face a left eye of the user in a third direction ③, and the second transparent member 421b may be disposed to face a right eye of the user in a fourth direction ④. According to various embodiments, when the display 421 is transparent, the display 421 may be disposed at a position facing the eyes of the user to form a display region.

According to an embodiment, the display 421 may include a lens including a transparent waveguide. The lens may serve to adjust the focus such that a screen (e.g., an XR content image) output to the display 421 is to be viewed by the eyes of the user. For example, light emitted from a display panel may pass through the lens and be transmitted to the user through the waveguide formed within the lens. The lens may include, for example, a Fresnel lens, a pancake lens, or a multichannel lens.

An optical waveguide (e.g., a waveguide) may serve to transmit a light source generated by the display 421 to the eyes of the user. The optical waveguide may be formed of glass, plastic, or a polymer, and may have a nanopattern formed on a portion of an inner or outer surface, for example, a grating structure of a polygonal or curved shape. According to an embodiment, light incident to one end of the optical waveguide, that is, an output image of the display 421 may be propagated inside the optical waveguide to be provided to the user. In addition, the optical waveguide formed of a free-form prism may provide the incident light to the user through a reflection mirror. The optical waveguide may include at least one of diffraction elements (e.g., a diffractive optical element (DOE) and a holographic optical element (HOE)) or at least one of reflective elements (e.g., a reflection mirror). The optical waveguide may guide an image output from the display 421 to the eyes of the user using the at least one diffractive element or reflective element included in the optical waveguide.

According to an embodiment, the diffractive element may include an input optical member/output optical member (not shown). For example, the input optical member may refer to an input grating region, and the output optical member (not shown) may refer to an output grating region. The input grating region may serve as an input end that diffracts (or reflects) light output from a light source (e.g., a micro-LED) to transmit the light to a transparent member (e.g., the first transparent member 421a and the second transparent member 421b) of the display region. The output grating region may serve as an outlet that diffracts (or reflects) the light transmitted to the transparent member (e.g., the first transparent member and the second transparent member) of the optical waveguide to the eyes of the user.

According to an embodiment, the reflective element may include a TIR optical element or a TIR waveguide for TIR. For example, TIR, which is a scheme for guiding light, may generate an angle of incidence such that light (e.g., a virtual image) input through the input grating region is to be reflected substantially 100% from one surface (e.g., a specific side) of the optical waveguide and the light is to be transmitted substantially 100% up to the output grating region.

In an embodiment, the light emitted from the display 421 may be guided to an optical path to the waveguide through the input optical member. The light traveling inside the optical waveguide may be guided toward the eyes of the user through the output optical member. The display region may be determined based on the light emitted in the direction of the eyes.

According to an embodiment, the electronic device 401 may include a plurality of cameras. For example, the cameras may include the first function camera 415 (e.g., a recognition camera) disposed in the second direction ② of the main body 410, the second function cameras 411 and 412 (e.g., image capturing cameras) disposed in the second direction ②, the third function camera 428 (e.g., an ET camera) disposed in the first direction ①, and the fourth function cameras 425 and 426 (e.g., face recognition cameras) disposed in the first direction ①, and may further include other function cameras (not shown).

The first function camera 415 (e.g., the recognition camera) may be used for a function of detecting a movement of the user or recognizing a gesture of the user. The first function camera 415 may support at least one of head tracking, hand detection and hand tracking, and space recognition. For example, the first function camera 415 may mainly use a GS camera having excellent performance compared to an RS camera to detect and track fine gestures or movements of hands and fingers, and may be configured as a stereo camera including two or more GS cameras for head tracking and space recognition. The first function camera 415 may perform functions, such as, 6DoF space recognition, and a SLAM function for recognizing information (e.g., position and/or direction) associated with a surrounding space through depth imaging.

The second function cameras 411 and 412 (e.g., the image capturing cameras) may be used to capture images of the outside, generate an image or video corresponding to the outside, and transmit it to a processor (e.g., the processor 120 of FIG. 1). The processor may display the image provided from the second function cameras 411 and 412 on the display 421. The second function cameras 411 and 412 may also be referred to as an HR or PV camera and may include an HR camera. For example, the second function cameras 411 and 412 may be color cameras equipped with a function for obtaining high-quality images, such as, an AF function and OIS, but are not limited thereto. The second function cameras 411 and 412 may also include a GS camera or an RS camera.

The third function camera 428 (e.g., the ET camera) may be disposed on the display 421 (or inside the main body) such that camera lens faces the eyes of the user when the user wears the electronic device 401. The third function camera 428 may be used for detecting and tracking the pupils (e.g., ET). The processor may verify a gaze direction by tracking movements of the left eye and the right eye of the user in an image received from the third function camera 428. By tracking positions of the pupils in the image, the processor may be configured such that the center of an XR content image displayed on the display region is positioned according to a direction in which the pupils are gazing. For example, the third function camera 428 may use a GS camera to detect the pupils and track the movements of the pupils. The third function camera 428 may be installed for each of the left eye and the right eye, and may have the same camera performance and specifications.

The fourth function cameras 425 and 426 (e.g., the face recognition cameras) may be used to detect and track a facial expression of the user (e.g., FT) when the user wears the electronic device 401.

According to an embodiment, the electronic device 401 may include a lighting unit (e.g., LED) (not shown) as an auxiliary means for cameras. For example, the third function camera 428 may use a lighting unit included in a display as an auxiliary means for facilitating gaze detection when tracking eye movements, to direct emitted light (e.g., IR LED of an IR wavelength) toward both eyes of the user. In another example, the second function cameras 411 and 412 may further include a lighting unit (e.g., a flash) as an auxiliary means for supplementing surrounding brightness when capturing an image of the outside.

According to an embodiment, the depth sensor 417 (or a depth camera) may be used to verify a distance to an object (e.g., a target) through, for example, TOF. TOF, which is a technology for measuring a distance to an object using a signal (e.g., near-infrared rays, ultrasound, or laser), may transmit a signal from a transmitter and then measure the signal by a receiver, and may measure a distance to an object based on a TOF of the signal.

According to an embodiment, the touch sensor 413 may be disposed in the second direction ② of the main body 410. For example, when the user wears the electronic device 401, the eyes of the user may view in the first direction ① of the main body. The touch sensor 413 may be implemented as a single type or a left/right separated type based on the shape of the main body 410 but is not limited thereto. For example, in a case in which the touch sensor 413 is implemented as the left/right separated type as shown in FIG. 4A, when the user wears the electronic device 401, a first touch sensor 413a may be disposed at a position corresponding to the right eye of the user in the third direction ③, and a second touch sensor 413b may be disposed at a position corresponding to the left eye of the user in the fourth direction ④.

The touch sensor 413 may recognize a touch input using at least one of, for example, capacitive, resistive, infrared, or ultrasonic method. For example, the touch sensor 413 using the capacitive method may recognize a physical touch (or contact) input or hovering (or proximity) input of an external object. According to some embodiments, the electronic device 401 may use a proximity sensor (not shown) to recognize the proximity to an external object.

According to an embodiment, the touch sensor 413 may have a two-dimensional (2D) surface and transmit, to the processor 120, touch data (e.g., touch coordinates) of an external object (e.g., a finger of the user) contacting the touch sensor 413. The touch sensor 413 may detect a hovering input of an external object (e.g., a finger of the user) approaching within a first distance away from the touch sensor 413 or detect a touch input contacting the touch sensor 413.

In an embodiment, touch sensor 413 may provide two-dimensional information about the contact point to processor 120 as "touch data" when an external object touches touch sensor 413. The touch data may be described as a "touch mode." When the external object is positioned within the first distance from the touch sensor 413 (or hovers above a proximity or touch sensor), the touch sensor 413 may provide hovering data about a time point or position of the external object hovering around the touch sensor 413 to the processor 120. The hovering data may also be described as a "hovering mode/proximity mode."

According to an embodiment, the electronic device 401 may obtain the hovering data using at least one of the touch sensor 413, a proximity sensor (not shown), or/and the depth sensor 417 to generate information about a distance between the touch sensor 413 and an external object, a position, or a time point.

According to an embodiment, the main body 410 may include a processor (e.g., the processor 120 of FIG. 1) and a memory (e.g., the memory 130 of FIG. 1) therein.

The memory 130 may store various instructions that may be executed by the processor. The instructions may include control instructions, such as arithmetic and logical operations, data movement, or input/output, which may be recognized by the processor. The memory may include a volatile memory (e.g., the volatile memory 132 of FIG. 1) and a non-volatile memory (e.g., the non-volatile memory 134 of FIG. 1) to store, temporarily or permanently, various pieces of data.

The processor may be operatively, functionally, and/or electrically connected, directly or indirectly, to each of the components of the electronic device 401 to perform control and/or communication-related computation or data processing of each of the components. The operations performed by the processor may be stored in the memory and, when executed, may be executed by the instructions that cause the processor to operate.

Although there will be no limitation to the computation and data processing functions implemented by the processor on the electronic device 401, a series of operations related to an XR content service function will be described hereinafter. The operations of the processor to be described below may be performed by executing the instructions stored in the memory.

According to an embodiment, the processor may generate a virtual object based on virtual information based on image information. The processor may output a virtual object related to an XR service along with background spatial information through the display 421. For example, the processor may obtain image information by capturing an image related to a real space corresponding to an FoV of the user wearing the electronic device 401 through the second function cameras 411 and 412, or generate a virtual space of a virtual environment. For example, the processor may perform control to display, on the display 421, XR content (hereinafter, referred to as an XR content screen) that outputs at least one virtual object such that it is visible overlapping in a FoV area or an area determined as the FoV of the user.

According to an embodiment, the electronic device 401 may have a form factor to be worn on the head of the user. The electronic device 401 may further include a strap and/or a wearing member to be fixed on a body part of the user. The electronic device 401 may provide a VR, AR, and/or MR-based user experience while worn on the head of the user.

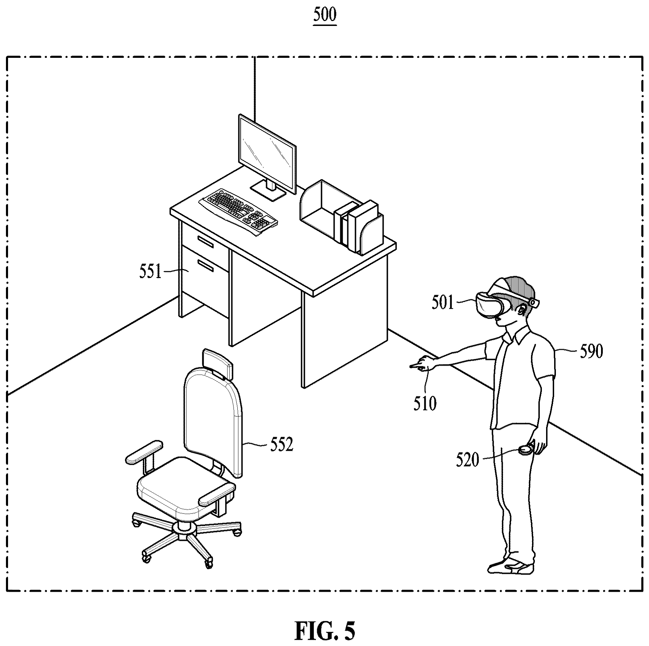

FIG. 5 is a diagram illustrating an example of construction of a virtual space and input from and output to a user in a virtual space according to various embodiment.

An electronic device 501 (e.g., the electronic device 101 of FIG. 1, the electronic device 201 of FIG. 2, the electronic device 301 of FIG. 3, or the electronic device 401 of FIG. 4) may obtain spatial information about a physical space in which sensors are located using the sensors. The spatial information may include a geographic location of the physical space in which the sensors are located, a size of the space, an appearance of the space, a position of a physical object 551 disposed in the space, a size of the physical object 551, an appearance of the physical object 551, and illuminant information. The appearance of the space and the physical object 551 may include at least one of a shape, a texture, or a color of the space and the physical object 551. The illuminant information, which is information about a light source that emits light acting in the physical space, may include at least one of an intensity, a direction, or a color of illumination. The sensors described above may collect information for providing AR. For example, in an AR device shown in FIGS. 2 to 4, the sensors may include a camera and a depth sensor. However, the sensors are not limited thereto, and the sensors may further include at least one of an infrared sensor, a depth sensor (e.g., a light detection and ranging (lidar) sensor, a radio detection and ranging (radar) sensor, or a stereo camera), a gyro sensor, an acceleration sensor, or a geomagnetic sensor.

The electronic device 501 may collect the spatial information over a plurality of time frames. For example, in each time frame, the electronic device 501 may collect information about a space of a portion belonging to a scene within a sensing range (e.g., a FoV) of a sensor at a position of the electronic device 501 in the physical space. The electronic device 501 may analyze the spatial information of the time frames to track a change (e.g., a position movement or state change) of an object over time. The electronic device 501 may integrally analyze the spatial information collected through the plurality of sensors to obtain integrated spatial information (e.g., an image obtained by spatially stitching scenes around the electronic device 501 in the physical space) of an integrated sensing range of the plurality of sensors.

The electronic device 501 may analyze the physical space as three-dimensional (3D) information, using various input signals (e.g., sensing data of an RGB camera, an infrared sensor, a depth sensor, or a stereo camera) of the sensors. For example, the electronic device 501 may analyze at least one of the shape, the size, or the position of the physical space, and the shape, the size, or the position of the physical object 551.

For example, the electronic device 501 may detect an object captured in a scene corresponding to an FoV of a camera, using sensing data (e.g., a captured image) of the camera. The electronic device 501 may determine a label of the physical object 551 (e.g., as information indicating classification of an object, including values indicating a chair, a monitor, or a plant) from a 2D scene image of the camera and an area (e.g., a bounding box) occupied by the physical object 551 in the 2D scene. Accordingly, the electronic device 501 may obtain 2D scene information from a position at which a user 590 is viewing. In addition, the electronic device 501 may also calculate a position of the electronic device 501 in the physical space based on the sensing data of the camera.

The electronic device 501 may obtain position information of the user 590 and depth information of a real space in a viewing direction, using sensing data (e.g., depth data) of a depth sensor. The depth information, which is information indicating a distance from the depth sensor to each point, may be expressed in the form of a depth map. The electronic device 501 may analyze a distance in the unit of each pixel at a 3D position at which the user 590 is viewing.

The electronic device 501 may obtain information including a 3D point cloud and mesh using various pieces of sensing data. The electronic device 501 may obtain a plane, a mesh, or a 3D coordinate point cluster that configures the space by analyzing the physical space. The electronic device 501 may obtain a 3D point cloud representing physical objects based on the information obtained as described above.

The electronic device 501 may obtain information including at least one of 3D position coordinates, 3D shapes, or 3D sizes (e.g., 3D bounding boxes) of the physical objects arranged in the physical space by analyzing the physical space.

Accordingly, the electronic device 501 may obtain physical object information detected in the 3D space and semantic segmentation information about the 3D space. The physical object information may include at least one of a position, an appearance (e.g., a shape, texture, and color), or a size of the physical object 551 in the 3D space. The semantic segmentation information, which is information obtained by semantically segmenting the 3D space into subspaces, may include, for example, information indicating that the 3D space is segmented into an object and a background and information indicating that the background is segmented into a wall, a floor, and a ceiling. As described above, the electronic device 501 may obtain and store 3D information (e.g., spatial information) about the physical object 551 and the physical space. The electronic device 501 may store 3D position information of the user 590 in the space, along with the spatial information.

The electronic device 501 may construct a virtual space 500 based on the physical positions of the electronic device 501 and/or the user 590. The electronic device 501 may generate the virtual space 500 by referring to the spatial information described above. The electronic device 501 may generate the virtual space 500 of the same scale as the physical space based on the spatial information and arrange objects in the generated virtual space 500. The electronic device 501 may provide a complete VR to the user 590 by outputting an image that substitutes the entire physical space. The electronic device 501 may provide MR or AR by outputting an image that substitutes a portion of the physical space. Although the construction of the virtual space 500 based on the spatial information obtained by the analysis of the physical space has been described, the electronic device 501 may also construct the virtual space 500 irrespective of the physical position of the user 590. The virtual space 500 described herein may be a space corresponding to AR or VR and may also be referred to as a metaverse space.

For example, the electronic device 501 may provide a virtual graphic representation that substitutes at least a partial space of the physical space. The electronic device 501, which is an OST-based electronic device, may output the virtual graphic representation overlaid on a screen area corresponding to at least a partial space of a screen display portion. The electronic device 501, which is a VST-based electronic device, may output an image generated by substituting an image area corresponding to at least a partial space in a space image corresponding to a physical space rendered based on the spatial information with a virtual graphic representation. The electronic device 501 may substitute at least a portion of a background in the physical space with a virtual graphic representation, but embodiments are not limited thereto. The electronic device 501 may only additionally arrange a virtual object 552 in the virtual space 500 based on the spatial information, without changing the background.

The electronic device 501 may arrange and output the virtual object 552 in the virtual space 500. The electronic device 501 may set a manipulation area for the virtual object 552 in a space occupied by the virtual object 552 (e.g., a volume corresponding to an appearance of the virtual object 552). The manipulation area may be an area in which a manipulation of the virtual object 552 occurs. In addition, the electronic device 501 may substitute the physical object 551 with the virtual object 552 and output the virtual object 552. The virtual object 552 corresponding to the physical object 551 may have the same or similar shape as or to the corresponding physical object 551. However, embodiments are not limited thereto, and the electronic device 501 may set only the manipulation area in a space occupied by the physical object 551 or at a position corresponding to the physical object 551, without outputting the virtual object 552 that substitutes the physical object 551. That is, the electronic device 501 may transmit, to the user 590, visual information representing the physical object 551 (e.g., light reflected from the physical object 551 or an image obtained by capturing the physical object 551) as it is without a change, and set the manipulation area in the corresponding physical object 551. The manipulation area may be set to have the same shape and volume as the space occupied by the virtual object 552 or the physical object 551, but is not limited thereto. The electronic device 501 may set the manipulation area that is smaller than the space occupied by the virtual object 552 or the space occupied by the physical object 551.

According to an example embodiment, the electronic device 501 may arrange a virtual object (not shown) (e.g., an avatar object) representing the user 590 in the virtual space 500. When the avatar object is provided in a first-person view, the electronic device 501 may provide a visualized graphic representation corresponding to a portion of the avatar object (e.g., a hand, a torso, or a leg) to the user 590 via the display described above (e.g., an OST display or a VST display). However, embodiments are not limited thereto, and when the avatar object is provided in a third-person view, the electronic device 501 may provide a visualized graphic representation corresponding to an entire shape (e.g., a back view) of the avatar object to the user 590 via the display described above. The electronic device 501 may provide the user 590 with an experience integrated with the avatar object.

In addition, the electronic device 501 may provide an avatar object of another user who enters the same virtual space 500. The electronic device 501 may receive feedback information that is the same as or similar to feedback information (e.g., information based on at least one of visual sensation, auditory sensation, or tactile sensation) provided to another electronic device (not shown) entering the same virtual space 500. For example, when an object is arranged in a certain virtual space 500 and a plurality of users access the virtual space 500, respective electronic devices 501 of the plurality of users 590 may receive feedback information (e.g., a graphic representation, a sound signal, or haptic feedback) of the same object arranged in the virtual space 500 and provide the feedback information to each user 590.

The electronic device 501 may detect an input to an avatar object of another electronic device and may receive feedback information from the avatar object of the other electronic device. An exchange of inputs and feedback for each virtual space 500 may be performed by a server (e.g., the server 108 of FIG. 1). For example, the server (e.g., a server providing a metaverse space) may transfer, to the users 590, inputs and feedback between the avatar object of the user 590 and an avatar object of another user 590. However, embodiments are not limited thereto, and the electronic device 501 may establish direct communication with another electronic device to provide an input based on an avatar object or receive feedback, not via the server.

For example, based on detecting a user input that selects a manipulation area, the electronic device 501 may determine that the physical object 551 corresponding to the selected manipulation area is selected by the user 590. An input of the user 590 may include at least one of a gesture input made by using a body part (e.g., a hand or eye), an input made by using a separate VR accessory device, or a voice input of the user.

The gesture input may be an input corresponding to a gesture identified by tracking a body part 510 of the user 590 and may include, for example, an input indicating or selecting an object. The gesture input may include at least one of a gesture by which a body part (e.g., a hand) moves toward an object for a predetermined period of time or more, a gesture by which a body part (e.g., a finger, an eye, or a head) points at an object, or a gesture by which a body part and an object contact each other spatially. A gesture of pointing at an object with an eye may be identified based on ET. A gesture of pointing at an object with a head may be identified based on head tracking.

Tracking the body part 510 of the user 590 may be mainly performed based on a camera of the electronic device 501 but is not limited thereto. The electronic device 501 may track the body part 510 based on a cooperation of sensing data of a vision sensor (e.g., image data of a camera and depth data of a depth sensor) and information collected by accessory devices to be described below (e.g., controller tracking or finger tracking in a controller). Finger tracking may be performed by sensing a distance or contact between an individual finger and the controller based on a sensor (e.g., an infrared sensor) embedded in the controller.

VR accessory devices may include, for example, a ride-on device, a wearable device, a controller device 520, or other sensor-based devices. The ride-on device, which is a device operated by the user 590 riding thereon, may include, for example, at least one of a treadmill-type device or a chair-type device. The wearable device, which is a manipulation device worn on at least a part of the body of the user 590, may include, for example, at least one of a full body suit-type or a half body suit-type controller, a vest-type controller, a shoe-type controller, a bag-type controller, a glove-type controller (e.g., a haptic glove), or a face mask-type controller. The controller device 520 may include an input device (e.g., a stick-type controller or a firearm) manipulated by a hand, foot, toe, or other body parts 510.

The electronic device 501 may establish direct communication with an accessory device and track at least one of a position or motion of the accessory device, but embodiments are not limited thereto. The electronic device 501 may communicate with the accessory device via a base station for VR.

For example, the electronic device 501 may determine that the virtual object 552 is selected, based on detecting an act of gazing at the virtual object 552 for a predetermined period of time or more through an eye gaze tracking technology described above. In another example, the electronic device 501 may recognize a gesture of pointing at the virtual object 552 through a hand tracking technology. The electronic device 501 may determine that the virtual object 552 is selected, based on that a direction in which a tracked hand points indicates the virtual object 552 for a predetermined period of time or more or that a hand of the user 590 contacts or enters an area occupied by the virtual object 552 in the virtual space 500.

The voice input of the user, which is an input corresponding to a user's voice obtained by the electronic device 501, may be sensed by, for example, an input module (e.g., a microphone) of the electronic device 501 or may include voice data received from an external electronic device of the electronic device 501. By analyzing the voice input of the user, the electronic device 501 may determine that the physical object 551 or the virtual object 552 is selected. For example, based on detecting a keyword indicating at least one of the physical object 551 or the virtual object 552 from the voice input of the user, the electronic device 501 may determine that at least one of the physical object 551 or the virtual object 552 corresponding to the detected keyword is selected.

The electronic device 501 may provide feedback to be described below as a response to the input of the user 590 described above.

The feedback may include visual feedback, auditory feedback, tactile feedback, olfactory feedback, or gustatory feedback. The feedback may be rendered by the server 108, the electronic device 101, or the external electronic device 102 as described above with reference to FIG. 1.

The visual feedback may include an operation of outputting an image through the display (e.g., a transparent display or an opaque display) of the electronic device 501.

The auditory feedback may include an operation of outputting a sound through a speaker of the electronic device 501.

The tactile feedback may include force feedback that simulates a weight, a shape, a texture, a dimension, and dynamics. For example, the haptic glove may include a haptic element (e.g., an electric muscle) that simulates a sense of touch by tensing and relaxing the body of the user 590. The haptic element in the haptic glove may act as a tendon. The haptic glove may provide haptic feedback to the entire hand of the user 590. The electronic device 501 may provide feedback that represents a shape, a size, and stiffness of an object through the haptic glove. For example, the haptic glove may generate a force that simulates a shape, a size, and stiffness of an object. The exoskeleton of the haptic glove (or a suit-type device) may include a sensor and a finger motion measurement device, may transfer a cable-pulling force (e.g., an electromagnetic, direct current (DC) motor-based, or pneumatic force) to fingers of the user 590, and may thereby transmit tactile information to the body. Hardware that provides such tactile feedback may include a sensor, an actuator, a power source, and a wireless transmission circuit. The haptic glove may operate by inflating and deflating an inflatable air bladder on a surface of the glove.

Based on an object in the virtual space 500 being selected, the electronic device 501 may provide feedback to the user 590. For example, the electronic device 501 may output a graphic representation (e.g., a representation of highlighting the selected object) indicating the selected object through the display. For example, the electronic device 501 may output a sound (e.g., a voice) notifying the selected object through a speaker. In another example, the electronic device 501 may transmit an electrical signal to a haptic supporting accessory device (e.g., the haptic glove) and may thereby provide a haptic motion that simulates a tactile sensation of a corresponding object to the user 590.

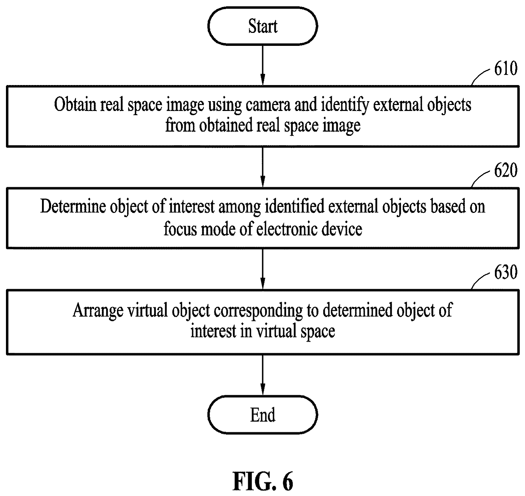

FIG. 6 is a flowchart schematically illustrating a process of arranging a virtual object corresponding to a real object in a virtual space according to various embodiments.

An electronic device (e.g., the electronic device 101 of FIG. 1, the electronic device 201 of FIG. 2, the electronic device 301 of FIG. 3, the electronic device 401 of FIG. 4, or the electronic device 501 of FIG. 5) according to an embodiment may be worn on the user. The electronic device may be an extended reality device (an XR device). The XR device may include all of a VR device, AR device, and MR device.

The electronic device may construct a virtual space (e.g., the virtual space 500 of FIG. 5) based on a physical location of the electronic device and/or a user, and arrange a virtual object in the virtual space. As described above with reference to FIG. 5, the virtual space may be a space that corresponds to AR or VR. The electronic device may generate a 3D virtual object by performing 3D modeling on a real object located in a real space. Hereinafter, a process in which the electronic device arranges a virtual object generated by modeling a real object in a virtual space will be schematically described.

In operation 610, the electronic device may obtain a real space image using a camera, and identify external objects from the obtained real space image.

In an embodiment, the electronic device may be worn on the head of the user and provide images related to XR to the user. The user may enter the virtual space with the electronic device worn on the user. When the electronic device receives a signal requesting to enter the virtual space from the user, the electronic device may turn on a camera (e.g., the first cameras 265a and 265b of FIG. 2 and the function camera 415 of FIG. 4A) that captures a real space to construct the virtual space. The camera may be used for recognition of a real space. The camera may capture an image of a real space with the camera's FoV. For example, the electronic device may measure a view direction and a FoV of the user wearing the electronic device, and rotate the camera based on the measured view direction and FoV of the user. In other words, the electronic device may obtain a real space image obtained by capturing the real space according to the view direction and the FoV of the user from the camera.

In an embodiment, the electronic device may identify external objects from the obtained real space image. The electronic device may identify external objects through image analysis from the obtained real space image.

In operation 620, the electronic device may determine an object of interest among the identified external objects based on a focus mode of the electronic device.

In an embodiment, the electronic device may determine the object of interest based on a configuration for the virtual space. For example, the configuration for the virtual space may comprise the focus mode of the electronic device.

In an embodiment, the electronic device may set the focus mode. For example, the electronic device may set the focus mode based on an input of the user. The electronic device may determine an object type to focus on based on the focus mode. More specifically, the electronic device may determine, as an object of interest, an external object with an object type corresponding to the focus mode among the external objects identified from the real space image.

In operation 630, the electronic device may arrange a virtual object corresponding to the determined object of interest in the virtual space.

In an embodiment, the electronic device may generate a virtual object corresponding to the object of interest by modeling the object of interest. The electronic device may arrange the generated virtual object in the virtual space. When the electronic device arranges a plurality of virtual objects in the virtual space, the electronic device may arrange the plurality of virtual objects in the virtual space such that they do not overlap each other. The electronic device may arrange the virtual object corresponding to the object of interest to be adjacent to a position in the virtual space corresponding to a position of the object of interest in the real space.

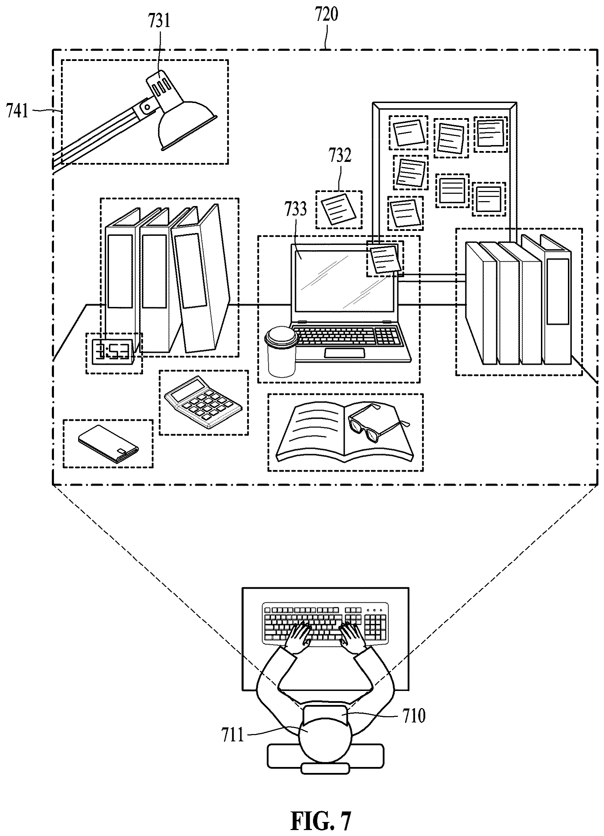

FIG. 7 is a diagram illustrating a process of identifying external objects from a real space image according to various embodiments.

In an embodiment, an electronic device 710 may identify external objects (e.g., a desk lamp 731, a memo pad 732, and a computer 733) from a real space image 720 obtained from a camera (e.g., the first cameras 265a and 265b of FIG. 2 or the function camera 415 of FIG. 4A).

In an embodiment, the electronic device 710 may identify the external objects (e.g., the desk lamp 731, the memo pad 732, and the computer 733) from the real space image 720 through image analysis. The electronic device 710 may identify the external objects from the real space image 720 using a machine learning model. For example, the electronic device 710 may identify the external objects by inputting the real space image 720 to a CNN model that is the machine learning model.

In an embodiment, the electronic device 710 may set a reality level. The reality level may represent a degree to which a virtual space is constructed similarly to a real space. The higher the reality level, the higher the degree to which the virtual space is constructed similarly to the real space, and the lower the reality level, the lower the degree to which the virtual space is constructed similarly to the real space. For example, the electronic device 710 may change the reality level based on an input of a user 711.

In an embodiment, the electronic device 710 may determine a size of an external object identifiable in the real space image 720 based on the reality level. The electronic device 710 may reduce a minimum or small size of the external object identifiable in the real space image 720 as the reality level increases. On the other hand, the electronic device 710 may increase the minimum or small size of the external object identifiable in the real space image 720 as the reality level decreases. In other words, the electronic device 710 may maintain or increase the number of external objects identified in the real space image 720 as the reality level increases. On the other hand, the electronic device 710 may maintain or reduce the number of external objects identified in the real space image 720 as the reality level decreases.

For example, the electronic device 710 may adjust the size of the external object identifiable in the real space image 720 using a bounding box. The electronic device 710 may extract a bounding box (e.g., a bounding box 741) that surrounds a candidate object (e.g., the desk lamp 731) from the real space image 720. A bounding box may have a rectangular shape, but the shape of the bounding box is not necessarily limited thereto. Among bounding boxes (e.g., the bounding box 741) extracted from the real space image 720, the electronic device 710 may identify a candidate object positioned within a bounding box having a threshold size or more as an external object, and does not identify a candidate object positioned within a bounding box having a size less than the threshold size as an external object. The electronic device 710 may reduce the minimum or small size of the external object identifiable in the real space image 720 by reducing the threshold size of the bounding box for identifying a candidate object as an external object as the reality level increases.

In another example, the electronic device 710 may adjust the size of the external object identifiable in the real space image 720 using a machine learning model. A machine learning model is a model that is designed to extract external objects from an image based on a reality level and an input of the image, which may include, for example, a neural network. The machine learning model may be trained such that a minimum or small size of an external object identifiable from an image is reduced as the reality level increases. The electronic device 710 may input the real space image 720 and the reality level to the machine learning model to obtain external objects (e.g., the desk lamp 731, the memo pad 732, and the computer 733) as output data of the machine learning model.

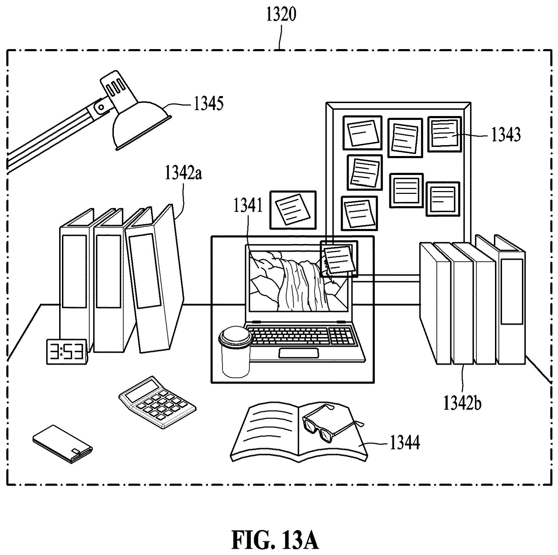

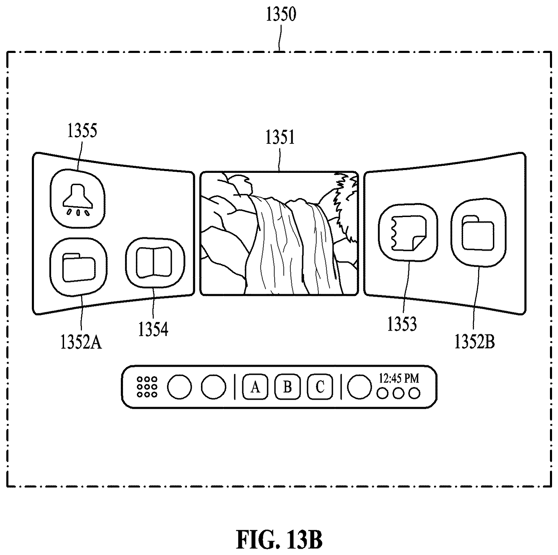

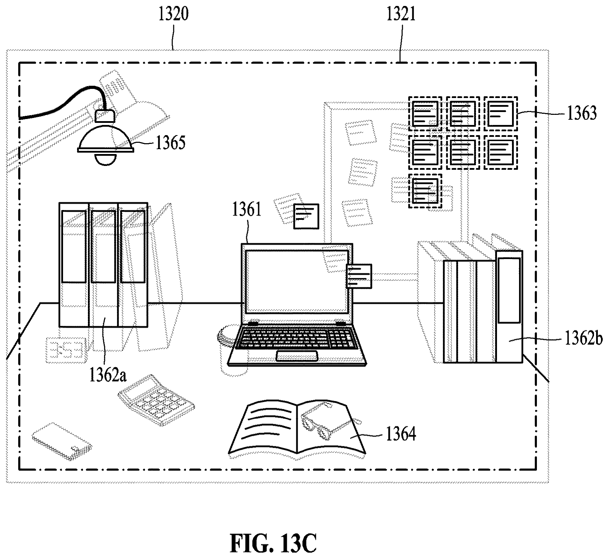

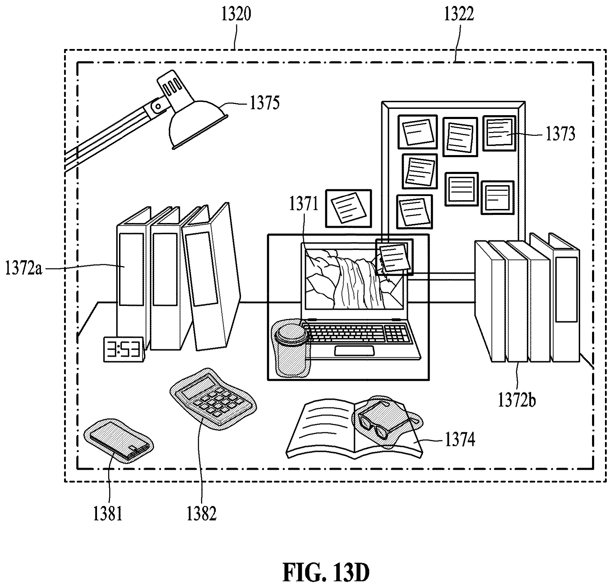

In another embodiment, the electronic device 710 may change a display method of a screen according to the reality level. The electronic device 710 may change the display method of the screen according to the reality level to change a degree to which the virtual space is constructed similarly to the real space. For example, the reality level may include a first level, a second level, and a third level, and the reality level may increase in order of the first level, the second level, and the third level. For example, when the reality level is set to the first level, the electronic device 710 may display a VR screen on a display. For example, when the reality level is set to the second level or the third level, the electronic device 710 may display an AR screen on the display. At this time, when the reality level is set to the second level, the electronic device 710 may blur the real space image obtained from the camera, and display the blurred image on the screen. On the other hand, when the reality level is set to the third level, the electronic device 710 may display the real space image obtained from the camera on the screen without blurring. An example of a display method of a screen will be described in more detail with reference to FIG. 13.

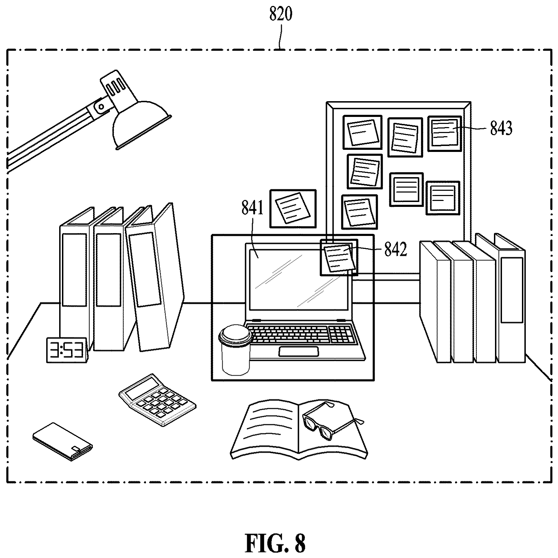

FIG. 8 is a diagram illustrating a process of determining an object of interest among identified external objects according to various embodiments.

In an embodiment, an electronic device (e.g., the electronic device 101 of FIG. 1, the electronic device 201 of FIG. 2, the electronic device 301 of FIG. 3, the electronic device 401 of FIG. 4, the electronic device 501 of FIG. 5, or the electronic device 710 of FIG. 7) may determine one or more objects of interest (e.g., a computer 841, a memo pad 842, and a memo pad 843) among identified external objects (e.g., the desk lamp 731, the memo pad 732, and the computer 733 of FIG. 7) based on a focus mode of the electronic device.

In an embodiment, the electronic device may determine, as the objects of interest, external objects with an object type corresponding to the focus mode of the electronic device among the identified external objects (e.g., the desk lamp 731, the memo pad 732, and the computer 733 of FIG. 7). In an embodiment, the electronic device may not determine, as the objects of interest, external objects with an object type other than the object type corresponding to the focus mode of the electronic device among the identified external objects (e.g., the desk lamp 731, the memo pad 732, and the computer 733 of FIG. 7).

In an embodiment, when the focus mode is a work mode, the electronic device may determine an object type corresponding to the work mode as an object type related to work. The object type related to work may include, for example, a computer, tablet, book, memo pad, printed material, desk, calendar, notebook, and the like. When the focus mode is a living room mode, the electronic device may determine an object type corresponding to the living room mode as an object type related to a living room. The object type related to the living room may include, for example, a TV, sofa, chair, table, plate, and the like. When the focus mode is a kitchen mode, the electronic device may determine an object type corresponding to the kitchen mode as an object type related to a kitchen. The object type related to the kitchen may include, for example, a refrigerator, induction cooktop, dishwasher, cutting board, kitchen utensils, and the like. When the focus mode is a game mode, the electronic device may determine an object type corresponding to the game mode as an object type related to a game. The object type related to the game may include, for example, a TV, game controller, and the like. When the focus mode is a pet mode, the electronic device may determine an object type corresponding to the pet mode as an object type related to a pet. The object type related to the pet may include, for example, a dog, cat, bowl, and the like.

In an embodiment, the electronic device may enter two or more focus modes simultaneously. For example, the electronic device may enter the work mode and the pet mode simultaneously. In such a case, the electronic device may set, as the objects of interest, all of external objects with the object type corresponding to the work mode and external objects with the object type corresponding to the pet mode among external objects identified in a real space image 820.

In an embodiment, the electronic device may determine the objects of interest among the external objects identified from the real space image 820 based on the focus mode of the electronic device and an input of a user. In other words, the electronic device may add or exclude objects of interest based on the input of the user. For example, the electronic device may exclude, from the objects of interest, some external objects among the external objects with the object type corresponding to the focus mode of the electronic device based on the input of the user. The electronic device may add, to the objects of interest, some external objects among external objects with an object type other than the object type corresponding to the focus mode of the electronic device based on the input of the user. For example, the electronic device may track a movement of eyes of the user using an ET camera (e.g., the ET camera 310 of FIG. 3), and detect a gaze of the user. For example, the electronic device may identify an object that corresponds to the gaze of the user, and display, on a screen, an interface object inquiring whether to add or exclude the object to or from the objects of interest, when the gaze of the user lingers on the object for a preset time or more. The electronic device may add or exclude the object to or from the objects of interest based on an input of the user to the interface object displayed on the screen.

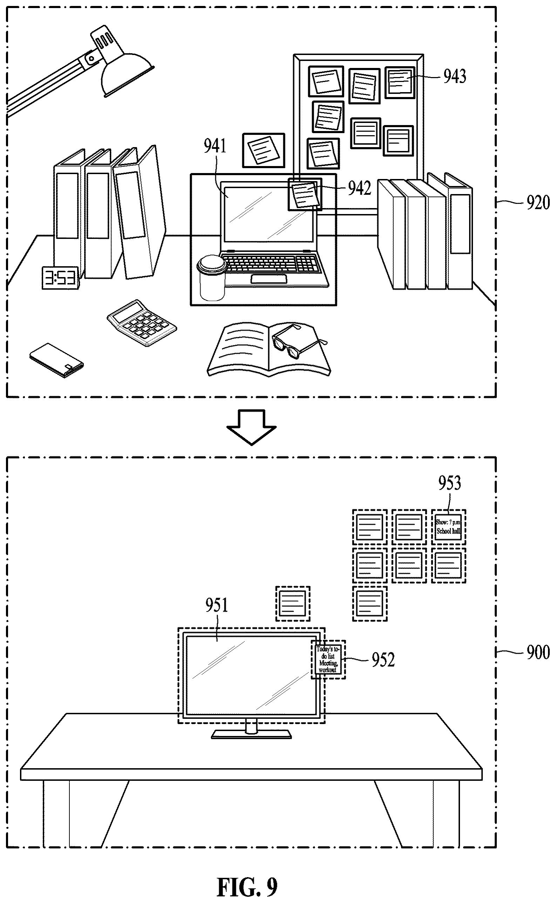

FIG. 9 is a diagram illustrating a process of generating a virtual object corresponding to an object of interest and arranging the virtual object in a virtual space according to various embodiments.

In an embodiment, an electronic device may generate a virtual object corresponding to an object of interest. The virtual object may be, for example, in a 2D or 3D form. A case in which the electronic device generates a virtual object in a 3D form will be mainly described with reference to FIG. 9. For example, the electronic device may load stored 3D data for the same object type as an object of interest from a database. The electronic device may establish communication with another electronic device, and load stored 3D data for the same object type as the object of interest from a database of the other electronic device.

In an embodiment, the electronic device may generate a virtual object corresponding to the object of interest based on the loaded 3D data. The database may store visual information (e.g., information about a shape, size, surface, texture, etc.) and information for performing a rendering operation on a virtual object in a virtual space 900 for each object type. The database may store information for generating objects having various shapes and sizes as virtual objects, respectively, although they have the same object type.

For example, the electronic device may determine, as an object of interest, a computer 941 which is an external object identified from a real space image 920. In this case, the electronic device may load the stored 3D data for the same object type as the computer 941 from the database. More specifically, the electronic device may analyze a shape and size of the computer 941 identified from the real space image 920, and load 3D data for generating, as a virtual object, an object having similar shape and size while having the same object type as the computer 941 from the database. The electronic device may generate a 3D virtual object 951 corresponding to the computer 941 using the loaded 3D data.

In an embodiment, the electronic device may give a visual effect to a virtual object corresponding to an object of interest. For example, when the electronic device may establish communication with the object of interest or a character is recognized on a surface of the object of interest, the electronic device may give a visual effect to a virtual object corresponding to the object of interest.

Each embodiment herein may be used in combination with any other embodiment(s) described herein.

In an embodiment, when the electronic device may establish communication with an object of interest (e.g., the computer 941), the electronic device may give a visual effect to a virtual object (e.g., the virtual object 951) corresponding to the object of interest (e.g., the computer 941) by establishing communication with the object of interest (e.g., the computer 941). The electronic device may output the virtual object (e.g., the virtual object 951) corresponding to the object of interest (e.g., the computer 941) with linkage of screen information displayed on a display of the object of interest (e.g., the computer 941) which has established communication. For example, the electronic device may receive information about a screen output to the display of the object of interest (e.g., the computer 941) from the object of interest (e.g., the computer 941). The electronic device may display the same screen as the screen displayed on the display of the object of interest (e.g., the computer 941) in an area of the virtual object (e.g., the virtual object 951) corresponding to the display of the object of interest (e.g., the computer 941). Accordingly, even when the user enters the virtual space 900, the same screen as the screen output from the object of interest (e.g., the computer 941) may be provided through the virtual object (e.g., the virtual object 951) corresponding to the object of interest (e.g., the computer 941) in the virtual space 900.

In an embodiment, when a character is recognized on a surface of an object of interest (e.g., a memo pad 942), the electronic device may output recognized character on a virtual object (e.g., a virtual object 952) corresponding to the object of interest (e.g., the memo pad 942). For example, the electronic device may recognize a character (e.g., optical character recognition (OCR)) in an area corresponding to the object of interest (e.g., the memo pad 942) of the real space image 920. The electronic device may display the same character as the character recognized on the surface of the object of interest (e.g., the memo pad 942) in an area of the virtual object (e.g., the virtual object 952) corresponding to the surface of the object of interest (e.g., the memo pad 942).

In an embodiment, the electronic device may arrange a plurality of virtual objects (e.g., virtual objects 951, 952, and 953) corresponding to a plurality of objects of interest (e.g., the computer 941, the memo pad 942, and a memo pad 943) in the virtual space 900 so as not to overlap each other. The arrangement of the virtual objects not to overlap in the virtual space 900 may represent that areas corresponding to respective virtual objects do not overlap in a gaze direction of a user.

The electronic device may generate the plurality of virtual objects (e.g., the virtual objects 951, 952, and 953) corresponding to the plurality of objects of interest (e.g., the computer 941, the memo pad 942, and the memo pad 943) determined from the real space image 920. The electronic device may arrange the plurality of virtual objects (e.g., the virtual objects 951, 952, and 953) so as not to overlap each other in the virtual space 900.

In an embodiment, the electronic device may arrange the virtual object (e.g., the virtual object 951) corresponding to the object of interest (e.g., the computer 941) close to a position in the virtual space 900 corresponding to a position of the object of interest (e.g., the computer 941) in the real space. For example, the electronic device may construct the virtual space 900 similar to the real space using the real space image 920. Here, the position in the virtual space 900 corresponding to the position of the object of interest in the real space may represent the position in the virtual space 900 corresponding to a distance between a user and the object of interest and a direction thereof in the real space. In other words, when the object of interest is away from the user at a distance A in a direction B in the real space, the position in the virtual space 900 corresponding to the position of the object of interest in the real space may represent a position away from the user at the distance A in the direction B in the virtual space 900.

In an embodiment, the electronic device may arrange an individual virtual object close to a position in the virtual space corresponding to a position of an object of interest corresponding to the individual virtual object in the real space, in order of priority of objects of interest corresponding to the plurality of virtual objects (e.g., the virtual objects 951, 952, and 953) corresponding to the plurality of objects of interest (e.g., the computer 941, the memo pad 942, and the memo pad 943). In this case, the electronic device may arrange the plurality of virtual objects (e.g., the virtual objects 951, 952, and 953) in order of priority of the corresponding objects of interest so as not to overlap each other. The electronic device may set the priority of the plurality of objects of interest (e.g., the computer 941, the memo pad 942, and the memo pad 943). The priority of objects of interest may be determined based on an object type. For example, an object type of a computer may have a higher priority than an object type of a memo pad. The electronic device may arbitrarily set the priority of a plurality of objects of interest with the same object type. Referring to FIG. 9, the electronic device may preferentially arrange the virtual object 951 corresponding to the computer 941 with the highest priority among the objects of interest in the virtual space 900. At this time, the electronic device may arrange the virtual object 951 at a position in the virtual space 900 corresponding to the position of the computer 941 in the real space. The electronic device may arrange the virtual object 952 corresponding to the memo pad 942 with a second highest priority among the objects of interest in the virtual space 900. At this time, the electronic device may arrange the virtual object 952 close to a position in the virtual space 900 corresponding to the position of the memo pad 942 in the real space so as not to overlap the virtual space 951 that is arranged in the virtual space 900 in advance. Since the computer 941 and the memo pad 942 are arranged to overlap each other in the real space, the electronic device may arrange the virtual object 952 in an area around the virtual object 951 in the virtual space 900. Accordingly, the user may simultaneously check the character displayed on the memo pad 942 through the virtual object 952 while looking at the screen of the computer 941 through the virtual object 951 in the virtual space 900.

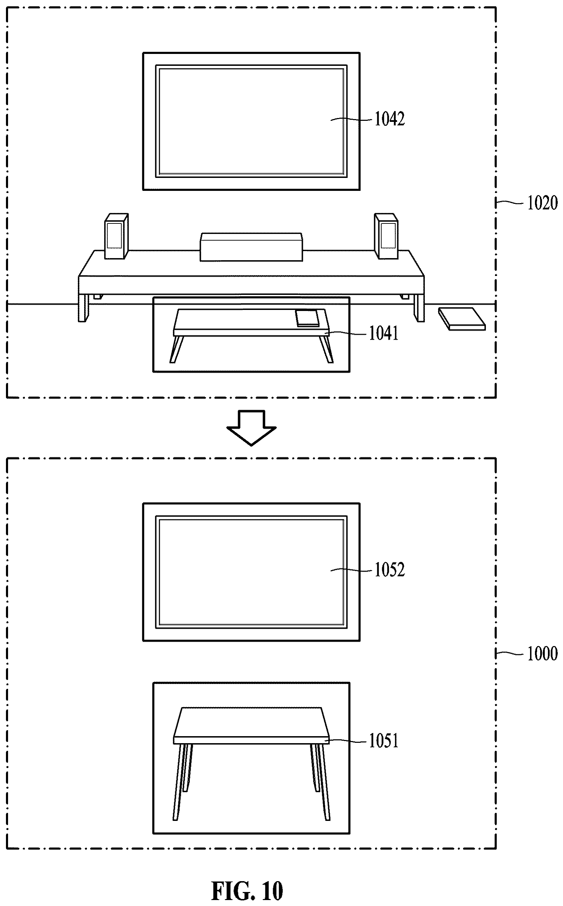

FIG. 10 is a diagram illustrating a process of determining an object of interest based on a living room mode of an electronic device and arranging the determined object of interest in a virtual space according to various embodiments.

In an embodiment, the electronic device may enter a living room mode. The electronic device may identify external objects from a real space image 1020 obtained through a camera. The electronic device may determine, as objects of interest, external objects (e.g., a table 1041 and a TV 1042) with an object type corresponding to the living room mode among the external objects identified from the real space image 1020.

In an embodiment, the electronic device may generate virtual objects 1051 and 1052 respectively corresponding to the table 1041 and the TV 1042 which are the objects of interest. The electronic device may load stored 3D data for the table 1041 and the TV 1042 from a database, and generate the virtual object 1051 and the virtual object 1052 respectively corresponding to the table 1041 and the TV 1042 based on the loaded 3D data. The electronic device may arrange the plurality of generated virtual objects 1051 and 1052 in a virtual space 1000. As described above, in a case of arranging the plurality of virtual objects 1051 and 1052 in the virtual space 1000, the electronic device may arrange the plurality of virtual objects 1051 and 1052 so as not to overlap each other in the virtual space 1000. The electronic device may arrange the plurality of virtual objects 1051 and 1052 in order of priority of the corresponding objects of interest. For example, the electronic device may set the TV 1042 to have a higher priority than the table 1041, and in this case, the electronic device may preferentially arrange the virtual object 1052 corresponding to the TV 1042 than the virtual object 1051 corresponding to the table 1041. The electronic device may preferentially arrange the virtual object 1052 corresponding to the TV 1042 in the virtual space 1000. The electronic device may arrange the virtual object 1052 at a position in the virtual space 1000 corresponding to the position of the TV 1042 in the real space. In addition, the electronic device may arrange the virtual object 1051 corresponding to the table 1041 close to a position in the virtual space 1000 corresponding to the position of the table 1041 in the real space so as not to overlap the virtual object 1052 arranged in the virtual space 1000 in advance. In addition, the electronic device may establish wireless communication with the TV 1042. The electronic device may receive information about a screen displayed on a display of the TV 1042 from the TV 1042. The electronic device may display the same screen as the screen displayed on the display of the TV 1042 in an area of the virtual object 1052 corresponding to the display of the TV 1042.

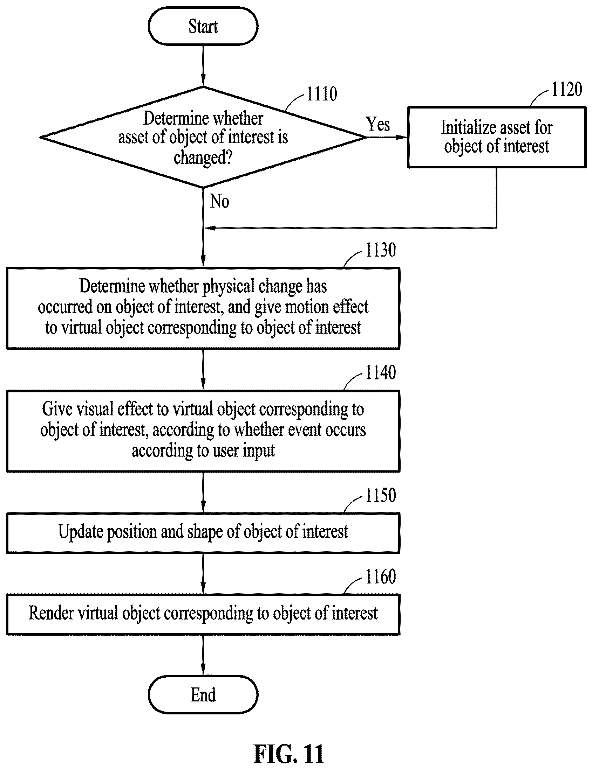

FIG. 11 is a diagram illustrating a process of updating a shape and position of a virtual object arranged in a virtual space over time according to various embodiments.

In an embodiment, the electronic device may update a shape and position of a virtual object corresponding to an object of interest by comparing an object of interest in a real space image of a current frame with an object of interest in a real space image of a next frame. The electronic device may update the shape and position of the virtual object arranged in the virtual space over time. Hereinafter, a process in which the electronic device displays a virtual object corresponding to an object of interest in a real space image of a current frame and then updates a shape and position of the virtual object according to a real space image of a next frame will be described.

First, in operation 1110, the electronic device may determine whether a (digital) asset of an object of interest is changed based on a real space image of a next frame. Here, the asset of the object of interest may represent a digital material that constitutes the object of interest. For example, the asset of the object of interest being changed may represent that the object of interest is changed to another object. The asset of the object of interest being not changed may represent that the object of interest is not changed to another object, but a physical change or a position change has occurred on the object of interest.

In operation 1120, when the asset of the object of interest is changed, the electronic device may initialize the asset for the object of interest. In other words, when the asset of the object of interest is changed, the electronic device may determine that the object of interest is changed to another object, and regenerate the asset.

In operation 1130, when the asset of the object of interest is not changed, the electronic device may determine whether a physical change has occurred on the object of interest, and give a motion effect to a virtual object corresponding to the object of interest. For example, referring to FIG. 9, a physical change that the memo pad 943, which is an object of interest, is shaken by wind may occur. In another example, a physical change that a ball which is an object of interest, bounces may occur. In this case, the electronic device may give a motion effect according to a similar physical change to a virtual object based on the physical change of the object of interest, while maintaining the asset of the object of interest. In other words, the electronic device may give a motion effect of being shaken by wind to the virtual object 953 corresponding to the memo pad 943, and give a motion effect of bouncing on the floor to a virtual object corresponding to the ball in the virtual space.

In operation 1140, the electronic device may give a visual effect to a virtual object corresponding to the object of interest, according to whether an event occurs according to a user input. The electronic device may determine whether an event occurs according to a user input in a virtual space. For example, a user may cause an event of writing characters in an area corresponding to a virtual object corresponding to an object of interest in a virtual space. In such a case, the electronic device may determine that an event has occurred based on the user input, and display characters input by the user in the area corresponding to the virtual object corresponding to the object of interest. The event by the user input is not limited to the above example, and a user may cause various events such as selecting an interface object in an area of a virtual object corresponding to a display area of an object of interest.

In operation 1150, the electronic device may update a position and shape of the object of interest. The electronic device may track a position change and a shape change of an object of interest in a real space through a real space image of a next frame. The electronic device may update the position and shape of the object of interest based on the tracked information. The electronic device may change the position and shape of the virtual object corresponding to the object of interest in the virtual space based on the change in the position and shape of the object of interest in the real space.

In operation 1160, the electronic device may render the virtual object corresponding to the object of interest. The electronic device may render the virtual object corresponding to the object of interest and then display the virtual object in the virtual space.

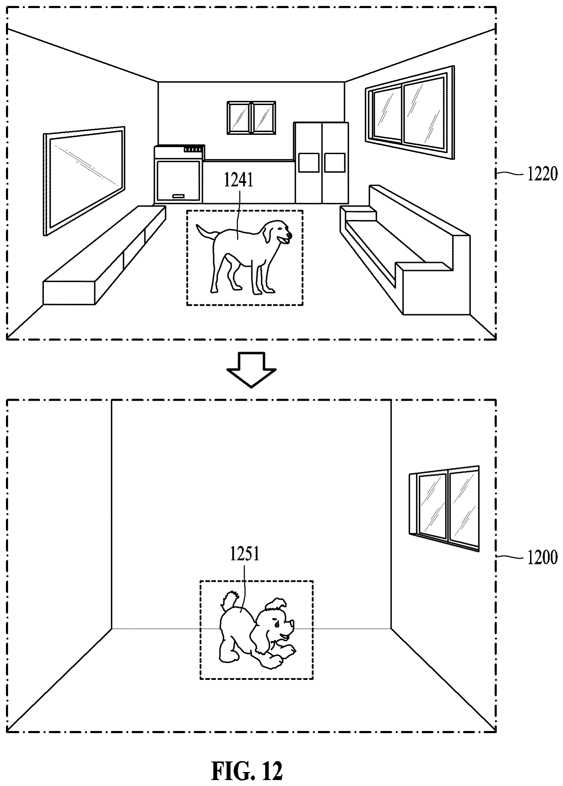

FIG. 12 is a diagram illustrating a process of determining whether to arrange a virtual object corresponding to a pet in a virtual space according to various embodiments.

In an embodiment, when an electronic device enters a pet mode, the electronic device may determine whether to arrange a virtual object 1251 corresponding to a pet 1241 identified as an external object in a virtual space 1200 by comparing a size of a real space 1220 and a size of the virtual space 1200.

In an embodiment, since the movement of the pet 1241 is unpredictable, there is a possibility that the pet 1241 attacks a user wearing the electronic device. Accordingly, the electronic device needs to continuously provide the user wearing the electronic device with the position of the pet 1241 through the virtual space 1200. The electronic device may enter the pet mode and arrange the virtual object 1251 corresponding to the pet 1241 in the virtual space 1200.

However, when the pet 1241 is far away from the user, the pet 1241 is less likely to attack the user, and therefore, providing the user with the position of the pet 1241 by the electronic device may disturb user's concentration. Thus, the electronic device may selectively arrange the virtual object 1251 corresponding to the pet 1241 in the virtual space 1200.

In an embodiment, when the electronic device detects the pet 1241 in the real space 1220, the electronic device may calculate the position of the pet 1241 in the real space 1220. The electronic device may determine whether to arrange the virtual object 1251 corresponding to the pet 1241 in the virtual space 1200 based on the position of the pet 1241 in the real space 1220. "Based on" as used herein covers based at least on.

More specifically, when the size of the real space 1220 is larger than the size of the virtual space 1200, the electronic device may arrange the virtual object 1251 corresponding to the pet 1241 in the virtual space 1200 only when the pet 1241 is positioned in an area of the real space 1220 corresponding to the virtual space 1200. In other words, when the size of the real space 1220 is larger than the size of the virtual space 1200, the electronic device may not arrange the virtual object 1251 corresponding to the pet 1241 in the virtual space 1200 when the pet 1241 is outside the area of the real space 1220 corresponding to the virtual space 1200. In other words, since the electronic device is sufficient to alert the user only within the area of the real space 1220 corresponding to the virtual space 1200, it is not necessary to provide the user with position information of the pet 1241 when the pet 1241 is outside the area of the real space 1220 corresponding to the virtual space 1200.

In an embodiment, when the size of the real space 1220 is smaller than the size of the virtual space 1200, the electronic device may arrange the virtual object 1251 corresponding to the pet 1241 in the virtual space 1200 regardless of the position of the pet 1241.

FIGS. 13A to 13D are diagrams illustrating a process in which an electronic device changes a display method of a screen according to a reality level according to various embodiments.

FIG. 13A shows a real space image 1320 obtained by capturing a real space obtained by an electronic device. Referring to FIG. 13, the electronic device may obtain the real space image 1320 obtained by capturing the real space by a camera (e.g., the first cameras 265a and 265b of FIG. 2 or the function camera 415 of FIG. 4A). The electronic device may identify external objects (e.g., a computer 1341, files 1342a and 1342b, a memo pad 1343, a book 1344, and a desk lamp 1345) from the real space image 1320. The electronic device may determine, as objects of interest, the computer 1341, the files 1342a and 1342b, the memo pad 1343, the book 1344, and the desk lamp 1345 among the external objects identified from the real space image 1320.

In an embodiment, the electronic device may change a display method of a screen according to the reality level. The electronic device may construct a virtual space similar to a real space as the reality level is high. For example, the reality level may include a first level, a second level, and a third level, and the reality level may increase in order of the first level, the second level, and the third level.

FIG. 13B shows an example of a screen displayed on a display when the electronic device sets the reality level to the first level.

In an embodiment, the electronic device may set the reality level to the lowest level, the first level. In such a case, the electronic device may display a VR screen on the display. In other words, the electronic device may display, on the display, a screen that does not reflect the real space image 1320 captured by the camera. For example, the electronic device may generate a virtual object corresponding to the object of interest in a 2D form. The electronic device may display the virtual object corresponding to the object of interest in an image or icon form. Referring to FIG. 13B, the electronic device may establish communication with the computer 1341 to receive an image displayed on a display of the computer 1341. The electronic device may arrange an image 1351 received as a virtual object corresponding to the computer 1341 in the virtual space 1350. The electronic device may arrange icons 1352a and 1352b, an icon 1353, an icon 1354, and an icon 1355 in the virtual space 1350 as virtual objects corresponding to the files 1342a and 1342b, the memo pad 1343, the book 1344, and the desk lamp 1345, respectively.

In an embodiment, the electronic device may display a toggle button on some icons. When a state of an object of interest arranged in a real space may be changed, the electronic device may add a toggle button on an icon corresponding to the object of interest. For example, the electronic device may change a state (a turned-on state or a turned-off state) of the desk lamp 1345, and display a toggle button on the icon 1355 which is the virtual object corresponding to the desk lamp 1345. In such a case, when a user input of selecting (or touching) an area corresponding to the toggle button of the icon 1355 is received, the electronic device may change the state (e.g., the turned-on state or the turned-off state) of the desk lamp 1345 arranged in the real space.

FIG. 13C shows an example of a screen displayed on the display when the electronic device sets the reality level to the second level.

In an embodiment, the electronic device may set the reality level to a middle level, the second level. In such a case, the electronic device may display an AR screen on the display. In other words, the electronic device may display a screen that reflects the real space image 1320 on the display.

In an embodiment, the electronic device may blur the real space image 1320 and display the image on the screen. The electronic device may generate a virtual object corresponding to an object of interest in a 3D form. The electronic device may generate one rendered image 1321 displaying virtual objects (e.g., virtual objects 1361, 1362a, 1362b, 1363, 1364, and 1365) corresponding to the objects of interest (e.g., the computer 1341, the files 1342a and 1342b, the memo pad 1343, the book 1344, and the desk lamp 1345). The electronic device may display the blurred real space image 1320 and the rendered image 1321 on a screen in an overlaid manner. FIG. 13C shows an example in which the real space image 1320 is overlaid on the rendered image 1321 displaying a plurality of virtual objects, however, embodiments are not limited thereto. The electronic device may generate a plurality of rendered images corresponding to a plurality of virtual objects, respectively, and overlay the plurality of rendered images and the real space image 1320.

FIG. 13D shows an example of a screen displayed on the display when the electronic device sets the reality level to the third level.

In an embodiment, the electronic device may set the reality level to the highest level, the third level. In such a case, the electronic device may display an AR screen on the display. In other words, the electronic device may display a screen that reflects the real space image 1320 on the display.

In an embodiment, the electronic device may display the screen without blurring the real space image 1320. The electronic device may generate a virtual object corresponding to an external object in a 3D form. The electronic device may generate one rendered image 1322 displaying virtual objects (e.g., virtual objects 1371, 1372a, 1372b, 1373, 1374, and 1375) corresponding to the objects of interest (e.g., the computer 1341, the files 1342a and 1342b, the memo pad 1343, the book 1344, and the desk lamp 1345). At this time, the electronic device may perform preprocessing on the real space image 1320. For example, the electronic device may blur areas corresponding to the objects of interest (e.g., the computer 1341, the files 1342a and 1342b, the memo pad 1343, the book 1344, and the desk lamp 1345) in the real space image 1320. In addition, the electronic device may blur areas (e.g., an area 1381 and an area 1382) corresponding to external objects with low importance from the real space image 1320. The electronic device may display the rendered image 1322 to be overlaid on the preprocessed real space image 1320 on the screen. For example, the electronic device may determine an external object having a size less than a threshold size as an external object with low importance among the external objects identified in the real space image 1320.

The electronic device according to embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C," may include any one of the items listed together in the corresponding one of the phrases, or all possible combinations thereof. Terms such as "1st", "2nd", or "first" or "second" may simply be used to distinguish the component from other components in question, and do not limit the components in other aspects (e.g., importance or order). It is to be understood that if a component (e.g., a first component) is referred to, with or without the term "operatively" or "communicatively", as "coupled with," "coupled to," "connected with," or "connected to" another component (e.g., a second component), the component may be coupled with the other component directly (e.g., by wire), wirelessly, or via at least a third component(s).

As used in connection with embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC). Thus, each "module" herein may comprise circuitry.

Various embodiments as set forth herein may be implemented as software (e.g., the program 140) including one or more instructions that are stored in a storage medium (e.g., the internal memory 136 or the external memory 138) that is readable by a machine (e.g., the electronic device 101) For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStoreTM), or between two user devices (e.g., smartphones) directly. If distributed online, at least portion of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

The embodiments described herein may be implemented using a hardware component, a software component, and/or a combination thereof. A processing device may be implemented using one or more general-purpose or special-purpose computers, such as, for example, a processor, a controller, an arithmetic logic unit (ALU), a digital signal processor (DSP), a microcomputer, a field programmable gate array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and generate data in response to execution of the software. For purpose of simplicity, the description of a processing device is used as singular; however, one skilled in the art will appreciate that a processing device may include multiple processing elements and/or multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described hardware devices may be configured to act as one or more software modules in order to perform the operations of the above-described embodiments, or vice versa.

While the disclosure has been illustrated and described with reference to various embodiments, it will be understood that the various embodiments are intended to be illustrative, not limiting. It will further be understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. An electronic device (101; 201; 301; 401; 501; 710) comprising:
a camera (265a; 265b; 415) configured to capture a real space;
communication circuitry;
at least one processor (120); and
memory (130) configured to store instructions that, when executed individually and/or collectively by the at least one processor (120), cause the electronic device (101; 201; 301; 401; 501; 710) to:
obtain a real space image (720; 820; 920; 1020) using the camera (265a; 265b; 415);
identify an external object from the obtained real space image (720; 820; 920; 1020);
determine an object of interest among the identified external object based on a configuration for virtual space (900; 1000; 1200); and
arrange a virtual object corresponding to the determined object of interest in the virtual space (900; 1000; 1200).

2. The electronic device (101; 201; 301; 401; 501; 710) of claim 1,
wherein the instructions, when executed individually and/or collectively by the at least one processor (120), cause the electronic device (101; 201; 301; 401; 501; 710) to:
reduce a minimum or small size of an external object identifiable in the real space image as a reality level set in the electronic device increases.

3. The electronic device (101; 201; 301; 401; 501; 710) of one of claims 1 and 2,
wherein the configuration for the virtual space (900; 1000; 1200) comprising a focus mode of the electronic device, and
wherein the instructions, when executed individually and/or collectively by the at least one processor (120), cause the electronic device (101; 201; 301; 401; 501; 710) to:
determine, as the object of interest, an external object with an object type corresponding to the focus mode of the electronic device (101; 201; 301; 401; 501; 710) among the identified external object.

4. The electronic device (101; 201; 301; 401; 501; 710) of one of claims 1 and 3, wherein the instructions, when executed individually and/or collectively by the at least one processor (120), cause the electronic device (101; 201; 301; 401; 501; 710) to:
determine the object of interest among the identified external object based on the focus mode of the electronic device (101; 201; 301; 401; 501; 710) and an input of a user.

5. The electronic device (101; 201; 301; 401; 501; 710) of one of claims 1 and 4, wherein the instructions, when executed individually and/or collectively by the at least one processor (120), cause the electronic device (101; 201; 301; 401; 501; 710) to:
load stored three-dimensional (3D) data for the same object type as the determined object of interest from a database, and generate the virtual object corresponding to the determined object of interest based on the loaded 3D data.

6. The electronic device (101; 201; 301; 401; 501; 710) of one of claims 1 and 5, wherein the instructions, when executed individually and/or collectively by the at least one processor (120), cause the electronic device (101; 201; 301; 401; 501; 710) to:
display, in a case where the electronic device (101; 201; 301; 401; 501; 710) establishes communication with the determined object of interest, the same screen as a screen displayed on a display of the determined object of interest in an area of the virtual object corresponding to the display of the determined object of interest.

7. The electronic device (101; 201; 301; 401; 501; 710) of one of claims 1 and 6, wherein the instructions, when executed individually and/or collectively by the at least one processor (120), cause the electronic device (101; 201; 301; 401; 501; 710) to:
display, when a character is recognized on a surface of the determined object of interest, the recognized character in an area of the virtual object corresponding to the surface of the determined object of interest.

8. The electronic device (101; 201; 301; 401; 501; 710) of one of claims 1 and 7, wherein the instructions, when executed individually and/or collectively by the at least one processor (120), cause the electronic device (101; 201; 301; 401; 501; 710) to:
arrange a plurality of virtual objects corresponding to a plurality of objects of interest so as not to overlap each other in the virtual space.

9. The electronic device (101; 201; 301; 401; 501; 710) of one of claims 1 and 8, wherein the instructions, when executed individually and/or collectively by the at least one processor (120), cause the electronic device (101; 201; 301; 401; 501; 710) to:
arrange an individual virtual object close to a position in the virtual space (900; 1000; 1200) corresponding to a position of an object of interest corresponding to the individual virtual object in the real space in order of priority of objects of interest corresponding to a plurality of virtual objects corresponding to a plurality of objects of interest.

10. The electronic device (101; 201; 301; 401; 501; 710) of one of claims 1 and 9, wherein the instructions, when executed individually and/or collectively by the at least one processor (120), cause the electronic device (101; 201; 301; 401; 501; 710) to:
determine whether an asset of the determined object of interest is changed in a real space image of a next frame;
initialize, when the asset of the determined object of interest is changed, the asset of the determined object of interest; and
determine, when the asset of the determined object of interest is not changed, whether a physical change has occurred on the determined object of interest to give a motion effect to the virtual object corresponding to the determined object of interest.

11. The electronic device (101; 201; 301; 401; 501; 710) of one of claims 1 and 10, wherein the instructions, when executed individually and/or collectively by the at least one processor (120), cause the electronic device (101; 201; 301; 401; 501; 710) to:
determine, when the electronic device (101; 201; 301; 401; 501; 710) enters a pet mode, whether to arrange a virtual object corresponding to a pet identified as an external object in the virtual space at least by comparing a size of the real space and a size of the virtual space.

12. The electronic device (101; 201; 301; 401; 501; 710) of one of claims 1 and 11, wherein the instructions, when executed individually and/or collectively by the at least one processor (120), cause the electronic device (101; 201; 301; 401; 501; 710) to:
arrange, when the size of the real space is larger than the size of the virtual space (900; 1000; 1200), the virtual object corresponding to the pet in the virtual space (900; 1000; 1200) only when the pet is positioned in an area of the real space corresponding to the virtual space (900; 1000; 1200); and
arrange, when the size of the real space is smaller than the size of the virtual space (900; 1000; 1200), the virtual object corresponding to the pet in the virtual space (900; 1000; 1200) regardless of the position of the pet.

13. A method performed by an electronic device (101; 201; 301; 401; 501; 710), the method comprising:
obtaining a real space image (720; 820; 920; 1020) using a camera (265a; 265b; 415), and identifying an external object from the obtained real space image (720; 820; 920; 1020);
determining an object of interest among the identified external object based on a configuration for virtual space (900; 1000; 1200); and
arranging a virtual object corresponding to the determined object of interest in the virtual space (900; 1000; 1200).

14. The method of claim 13, wherein the identifying of the external object from the obtained real space image comprises:
reducing a minimum or small size of an external object identifiable in the real space image as a reality level set in the electronic device increases.

15. The method of one of claims 13 and 14, wherein the configuration for the virtual space (900; 1000; 1200) comprising a focus mode of the electronic device, and
wherein the determining of the object of interest among the identified external object comprises:
determining the object of interest among the identified external object based on the focus mode of the electronic device (101; 201; 301; 401; 501; 710) and an input of a user.
